# EUROPEAN PATENT APPLICATION

(11) **EP 4 093 138 A1**
(43) Date of publication of application: **23.11.2022**
(21) Application number: 20913723.1
(22) Date of filing: 30.12.2020
(51) Int. Cl.: H04W 74/08

(54) **DATA PROCESSING METHODS AND APPARATUSES, FIRST COMMUNICATION NODE, SECOND COMMUNICATION MODE, AND STORAGE MEDIUM**

(30) Priority: 16.01.2020 CN 202010048797
(71) Applicant: ZTE Corporation, Shenzhen, Guangdong 518057 (CN)
(72) Inventor: LI, Weimin, Shenzhen, Guangdong 518057 (CN); LI, Zhigang, Shenzhen, Guangdong 518057 (CN); YUAN, Zhifeng, Shenzhen, Guangdong 518057 (CN); MA, Yihua, Shenzhen, Guangdong 518057 (CN)
(74) Representative: Aipex B.V.
(86) International application number: PCT/CN2020/141211
(87) International publication number: WO 2021/143528

(57) **Abstract**

Provided is a data processing method and apparatus, a first communication node, a second communication node and a storage medium. The data processing method includes: N first sequences are acquired; a second sequence is determined according to at least one first sequence of the N first sequences; a processing is performed on data based on the second sequence to obtain data symbols; and the N first sequences and the data symbols are sent; where N is an integer greater than or equal to 2.

## Description

The present application claims priority to Chinese Patent Application No. 202010048797.8, filed with the China National Intellectual Property Administration (CNIPA) on Jan. 16, 2020, disclosure of which is incorporated herein by reference in its entirety.

### TECHNICAL FIELD

The present application relates to the field of communications and, for example, to a data processing method and apparatus, a first communication node, a second communication node, and a storage medium.

### BACKGROUND

A grant-free transmission terminal may autonomously send data without sending a scheduling request and waiting for a dynamic scheduling. Thus, a grant-free transmission may reduce signaling overhead and transmission time delay, and may also reduce power consumption of the terminal. Moreover, the grant-free transmission may be combined with a non-orthogonal transmission, and thus a number of access users are increased.

The grant-free transmission includes two schemes, namely, a pre-configuration grant-free and a contention grant-free. For a multi-pilot-based contention grant-free transmission scheme, a transmitter randomly selects multiple pilot sequences, and a receiver respectively utilizes multiple pilots to perform a user identification and detection. In the multi-pilot-based contention grant-free transmission scheme, a symbol subjected to a digital modulation may be spread by using a spreading sequence and then subjected to a resource mapping and sending. However, when multi-pilot-based grant-free transmission and spreading are combined, how to perform a data processing so as to enable two communication parties to perform a communication is a technical problem to be solved urgently.

### SUMMARY

The present application provides a data processing method and apparatus, a first communication node, a second communication node, and a storage medium.

An embodiment of the present application provides a data processing method, applied to a first communication node. The data processing method includes that: N first sequences are acquired; a second sequence is determined according to at least one first sequence of the N first sequences; a processing is performed on data based on the second sequence to obtain data symbols; and the N first sequences and the data symbols are sent; where N is an integer greater than or equal to 2.

An embodiment of the present application further provides a data processing method, applied to a second communication node. The data processing method includes that: a signal and data symbols are received, where the signal is generated based on N first sequences; the signal is detected to obtain M sequences which are used for generating the signal, and a second sequence corresponding to the data symbols is determined according to the M sequences; and the data symbols are detected according to the second sequence to acquire a detection result; where N is an integer greater than or equal to 2, and M is an integer greater than or equal to 1.

An embodiment of the present application further provides a data processing apparatus, configured at a first communication node. The data processing apparatus includes an acquisition module, a determination module, a processing module and a sending module. The acquisition module is configured to acquire N first sequences. The determination module is configured to determine a second sequence according to at least one first sequence of the N first sequences. The processing module is configured to perform a processing on data based on the second sequence to obtain data symbols. The sending module is configured to send the N first sequences and the data symbols, where N is an integer greater than or equal to 2.

An embodiment of the present application further provides a data processing apparatus, configured at a second communication node. The data processing apparatus includes a receiving module, a detection module and an acquisition module. The receiving module is configured to receive a signal and data symbols, where the signal is generated based on N first sequences, and N is an integer greater than or equal to 2. The detection module is configured to detect the signal to obtain M sequences which are used for generating the signal, and determine a second sequence corresponding to the data symbols according to the M sequences, where M is an integer greater than or equal to 1. The acquisition module is configured to detect the data symbols according to the second sequence to acquire a detection result.

An embodiment of the present application further provides a first communication node. The first communication node includes one or more processors and a storage apparatus. The storage apparatus is configured to store one or more programs; where the one or more programs, when executed by the one or more processors, cause the one or more processors to implement any one of the data processing methods applied to the first communication node in the embodiments of the present application.

An embodiment of the present application further provides a second communication node. The second communication node includes one or more processors and a storage apparatus. The storage apparatus is configured to store one or more programs; where the one or more programs, when executed by the one or more processors, cause the one or more processors to implement any one of the data processing methods applied to the second communication node in the embodiments of the present application.

An embodiment of the present application further provides a storage medium. The storage medium stores a computer program, where the computer program, when executed by a processor, implements any one of the data processing methods in the embodiments of the present application.

### BRIEF DESCRIPTION OF DRAWINGS

FIG. 1 is a flowchart of a data processing method provided in the present application;
FIG. 1A is a schematic diagram of a traditional transmission frame structure of a "pilot + data" - based contention grant-free scheme;
FIG. 1B is a schematic diagram of a transmission frame structure of a "multi-pilot + data"-based contention grant-free scheme;
FIG. 1C is a schematic diagram of a CDF distribution of sequence cross-correlation values provided in the present application;
FIG. ID is a schematic diagram of another CDF distribution of sequence cross-correlation values provided in the present application;
FIG. 2 is a flowchart of another data processing method provided in the present application;
FIG. 3 is a schematic structural diagram of a data processing apparatus provided in the present application;
FIG. 4 is a schematic structural diagram of another data processing apparatus provided in the present application;
FIG. 5 is a schematic structural diagram of a first communication node provided in the present application; and
FIG. 6 is a schematic structural diagram of a second communication node provided in the present application.

### DETAILED DESCRIPTION

Embodiments of the present application will hereinafter be described with reference to the accompanying drawings.

The processes shown in the flowcharts of the accompanying drawings may be executed in a computer system, such as a set of computer-executable instructions. Moreover, while a logical order is shown in the flowcharts, in some cases, processes shown or described may be performed in a different order than herein.

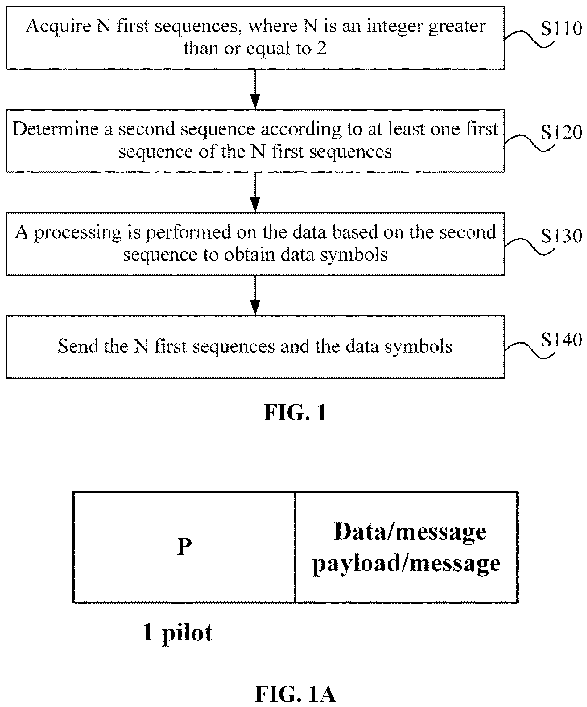

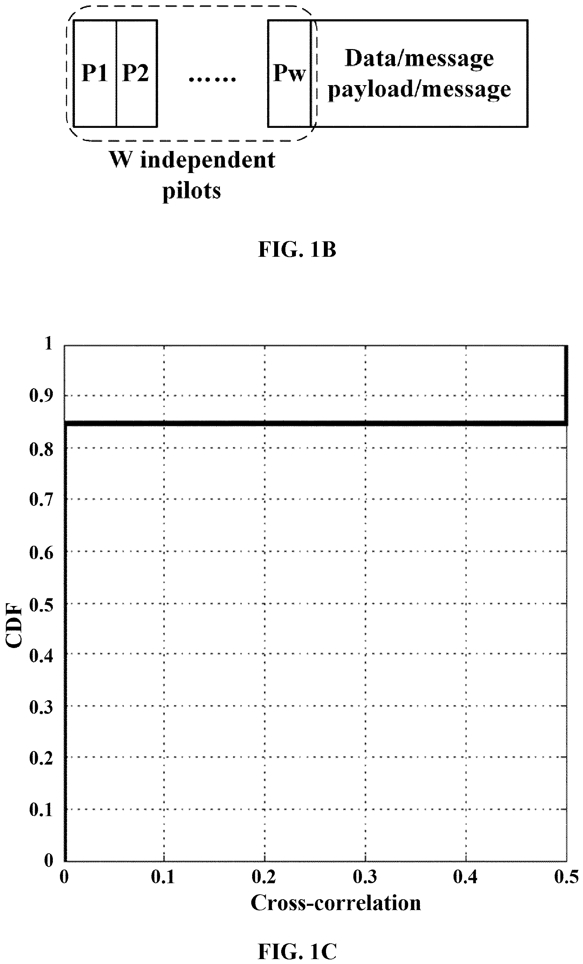

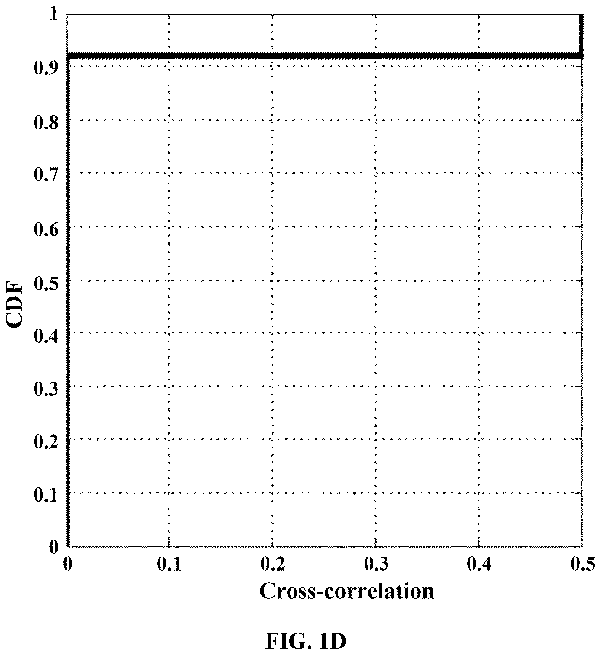

In an exemplary implementation, FIG. 1 is a flowchart of a data processing method provided in the present application, this method may be applied to a case of a data processing performed when multi-pilot-based grant-free transmission and spreading are combined. This method may be performed by a data processing apparatus provided in the present application, the data processing apparatus may be implemented by software and/or hardware, and is generally integrated on a first communication node, and the first communication node may be any type of wireless user equipment.

For a multi-pilot-based contention grant-free transmission scheme, multiple independent or randomly selected pilot sequences are designed at a transmitting side (such as a first communication node side), and multiple pilots are respectively used for performing a user identification and detection at a receiving side (such as a second communication node side). Therefore, when the scheme is combined with a spreading process, and a spreading sequence is used to spread a data modulation symbol and then sent, the problems of how to design a pilot sequence and establish an association relationship between the pilot sequence and the spreading sequence, and of how to determine the spreading sequence used by the transmitter according to the identified pilot sequence by the receiver need to be solved, so that a data detection is realized.

According to the present application, the contention grant-free transmission based on the combination of multiple pilots and spreading is realized.

As shown in FIG. 1, the data processing method provided in the present application includes S110, S120, S130 and S140.

In S110, N first sequences are acquired.

In multi-pilot transmission, one first sequence may correspond to one pilot, or one first sequence may be a pilot sequence used by one pilot, and N is an integer greater than or equal to 2.

Each first sequence may be acquired from a same sequence set or may be acquired from different sequence sets. Any two sequences in the N first sequences may be different, or T sequences in the N first sequences are the same, where T is an integer greater than or equal to 2, and T is less than or equal to N.

Each first sequence may be randomly acquired.

A value of N is not limited here, and in an example, the value of N includes 2 or 3.

In an example, the N first sequences are each L in length, and L is an integer greater than or equal to 2.

In S120, a second sequence is determined according to at least one first sequence of the N first sequences.

When data is processed, such as a spreading processing, a relationship between the N first sequences and the second sequence may be constructed, and the second sequence is used for processing the data. The second sequence may be a sequence determined according to at least one sequence of the N first sequences.

After the N first sequences are acquired, in this process, a combined sequence is determined based on the N first sequences, and then the second sequence is determined based on the combined sequence. The combined sequence is a sequence obtained after a combining process is performed on the N first sequences, and the combining process includes a superposition process or a series combination process. Therein, the superposition process may be considered to superpose, i.e. add, the N first sequences. The series combination includes directly connecting the first sequences in series, namely series connection of the sequences, or connecting elements in the first sequences in series according to a certain order, namely series connection of the elements, for example, a first element of each first sequence is extracted firstly during a series connection, then a second element of each first sequence is extracted, and so on, so that a series combination is completed.

After the N first sequences are acquired, in this process, the second sequence is determined according to one first sequence of the N sequences. When the second sequence is determined according to the one first sequence of the N first sequences, the second sequence may be determined based on the first sequence and a corresponding relationship between the first sequence and the second sequence. Therein, the first sequence may be considered as a first sequence for determining the second sequence among the N first sequences. The corresponding relationship between the first sequence and the second sequence may be pre-constructed. For example, the corresponding relationship between the first sequence and the second sequence is determined based on a first sequence set to which the first sequence belongs and a second sequence set to which the second sequence belongs. The first sequence in the first sequence set and the second sequence in the second sequence set may be in a one-to-one relationship or a multiple-to-one relationship.

After the N first sequences are acquired, in this process, the second sequence is determined according to multiple first sequences of the N first sequences. When the second sequence is determined according to the multiple first sequences of the N first sequences, a combined sequence may be determined based on the multiple first sequences, and then the second sequence is determined based on the combined sequence and a corresponding relationship between the combined sequence and the second sequence. The combined sequence may be a sequence obtained by combining the multiple first sequences. A corresponding relationship between the combined sequence and the second sequence may be pre-constructed, for example, is determined based on a corresponding relationship between a combined sequence set and a second sequence set. The combined sequence set may be determined based on at least one sequence set to which the multiple first sequences belong. For example, the multiple first sequences are traversed and extracted in the at least one sequence set to which the multiple first sequences belong, and then a combining process is performed to obtain the combined sequence set.

In an example, in order to enable a spreading transmission, or an equivalent spreading transmission, or a diversity transmission of data, a length of the second sequence may be T, and T is an integer greater than or equal to 2.

In S130, a processing is performed on the data based on the second sequence to obtain data symbols.

After the second sequence is determined, a processing is performed on the data based on the second sequence to obtain the data symbols, and a processing means is not limited and may be determined based on the function of the second sequence. In an example, a spreading processing; a modulation processing; or a mapping processing is performed on the data based on the second sequence. These processing may implement the spreading transmission, or the equivalent spreading transmission, or the diversity transmission of the data.

In S140, the N first sequences and the data symbols are sent.

After the data symbols are obtained, in this process, the N first sequences and the data symbols may be sent so as to be received and processed by the second communication node.

When the N first sequences are sent, the N first sequences are mapped to different transmission resources directly; or the N first sequences are combined to obtain a combined sequence and then the combined sequence is mapped to a transmission resource.

The data processing method provided in the present application is applied to a first communication node and includes that: the N first sequences are acquired; the second sequence is determined according to the at least one first sequence of the N first sequences; a processing is performed on the data based on the second sequence to obtain the data symbols; and the N first sequences and the data symbols are sent; where N is an integer greater than or equal to 2. By using this method, the combination of multi-pilot and spreading transmission may be realized, whereby it is beneficial to improve the transmission performance of users and the performance of the system.

On the basis of the above-described embodiments, an extended embodiment of the above-described embodiments is proposed, and in order to make the description brief, only the differences from the above-described embodiments are described in the extended embodiment.

In an embodiment, the N first sequences are randomly acquired.

In an embodiment, that the N first sequences are acquired includes one of: the N first sequences are acquired from a sequence set, where any two sequences in the N first sequences are different, or T sequences in the N first sequences are the same, T is an integer larger than or equal to 2, and T is less than or equal to N; the N first sequences are acquired from different sequence sets; or the N first sequences are acquired from different subsets of a same sequence set.

In an embodiment, the sequence set includes one or more of: a Hadamard sequence set; a sequence set obtained according to the Hadamard sequence set; a ZC sequence set; or a four-phase sequence set.

In an embodiment, that the second sequence is determined according to the at least one first sequence of the N first sequences includes: a combined sequence is determined according to the N first sequences; and the second sequence is determined according to the combined sequence and a corresponding relationship between the combined sequence and the second sequence.

When the combined sequence is determined according to the N first sequences, a combining processing is performed on the N first sequences to obtain the combined sequence. The combining processing includes the superposition processing or the series combination processing. The combined sequence may also be obtained by other means of combining processing. For example, assuming there are two first sequences, elements of the two first sequences may be used as real and imaginary parts, respectively, so as to obtain the combined sequence.

In an embodiment, that the combined sequence is determined according to the N first sequences includes: a series combination processing or a superposition processing is performed on the N first sequences to obtain the combined sequence.

In an example, the combined sequence has a length of L or N^{∗}L. For example, when the superposition processing is adopted, the length of the combined sequence is L; and when the series combination processing is adopted, the length of the combined sequence is N ^{∗} L.

In an embodiment, the second sequence is determined according to the at least one first sequence of the N first sequences includes: the second sequence is determined according to one first sequence of the N first sequences and a corresponding relationship between the first sequence and the second sequence.

In an embodiment, a processing on the data based on the second sequence includes one of: a spreading processing; a modulation processing; or a mapping processing.

In an embodiment, that sending the N first sequences includes one of: the N first sequences are mapped to different transmission resources, at least one signal is generated and sent; or the N first sequences are combined to obtain a combined sequence and then the combined sequence is mapped to a transmission resource, one signal is generated and sent, where the combined processing includes a series combination processing or a superposition processing.

In an embodiment, one first sequence corresponds to one pilot.

In an embodiment, transmission resources used by pilots respectively corresponding to the N first sequences include one of: time division resources; frequency division resources; time-frequency division resources; code division resources; or randomly selected resources. In a case where one first sequence corresponds to one pilot, pilots corresponding to the N first sequences include N pilots.

In an embodiment, the data carries information, and the information includes one or more of: identification information of the N first sequences; energy information of at least one first sequence of the N first sequences; identification information of the second sequence; or identification information of the first communication node.

Identification information of the N first sequences is used for identifying a corresponding first sequence, and identification information of the second sequence is used for identifying the second sequence. Identity identification information of the first communication node is used for identifying the first communication node. A content of each piece of identification information is not limited here as long as a corresponding content may be identified. In an example, the identification information described above includes an index, a numbering, or an identification code.

The energy information may be information identifying the energy of a corresponding sequence (e.g. at least one first sequence), and a content of the energy information is not limited here as long as the energy of a corresponding sequence may be identified. In an example, the energy information described above includes an energy level or an energy proportion.

Following description is illustrative of the present application, and the data processing method described in the present application may be considered as a data transmission method.

For a grant-free transmission, the terminal may autonomously send data without sending a scheduling request and waiting for a dynamic scheduling. Thus, the grant-free transmission may reduce signaling overhead and transmission time delay, and may also reduce power consumption of the terminal. Moreover, the grant-free transmission may be combined with a non-orthogonal transmission, and thus a number of access users are increased.

The grant-free transmission includes two schemes, namely, a pre-configuration (semi-persistent scheduling or configured grant) grant-free and a contention (contention-based) grant-free. For the pre-configuration grant-free, a base station may pre-configure or semi-persistent configure time-frequency resources, pilot sequences and the like for each terminal; through configuration, it may be guaranteed that time-frequency resources and/or pilot sequences used by multiple terminals are different, collision may be avoided, and a user identification and detection may be performed conveniently; the available time-frequency resources are usually periodic and are suitable for periodic traffic, however, when the available time-frequency resources are used for random burst traffic, the transmission efficiency is low, and the time delay is large. For the contention grant-free, when a traffic arrives at a terminal, time-frequency resources, pilot sequences and the like may be randomly selected for contention access and transmission, the time-frequency resources, the pilot sequences and the like used by multiple terminals may collide, and the receiver needs to realize the user identification and detection through a more complex or advanced blind detection algorithm; the contention grant-free is more suitable for random burst traffic, and has the better transmission efficiency and the lower time delay.

The contention grant-free may be realized based on a channel structure of "pilot + data", and the base station realizes a multi-user detection through the pilot. The pilot at least includes a preamble, a reference signal and the like.

FIG. 1A is a schematic diagram of a traditional transmission frame structure of a "pilot + data" - based contention grant-free scheme. As shown in FIG. 1A, one pilot is used in a traditional scheme, this pilot may consist of a sequence. A receiver performs user identification and detection through the pilot. If two users select different pilots, then the two users may be correctly received and detected. When two users select a same pilot, i.e., collision occurs, and at this time, the receiver can only identify one user and only obtain one channel estimation result, and the channel estimation result is a sum of channels of the two users. In this case, if powers of two user equipment (UEs) are comparable, it is likely that neither user may be correctly decoded. Due to a limited number of pilots, along with a number of users increases, the collision situation deteriorates rapidly, so that a number of access users supported by the system are affected.

FIG. 1B is a schematic diagram of a transmission frame structure of a "multi-pilot + data"-based contention grant-free scheme, as shown in FIG. 1B, the main idea of the multi-pilot scheme is to design multiple independent or randomly selected pilots at the same resource overhead. The receiver performs the user identification and detection by using multiple pilots, respectively. If two users collide on pilot 1 and do not collide on pilot 2, the user identification and detection may still be realized through the pilot 2, then an interference cancellation is performed, so that the detection performance of other users is improved.

For the scheme shown in FIG. 1A, assuming that a candidate pilot set contains N pilot sequences, the contention access of two users is used as an example, a collision rate is 1/N. For the scheme shown in FIG. 1B, assuming that 2 independent pilots exist, i.e. W=2, and assuming that the pilot overhead is unchanged, then each pilot may be randomly selected from a candidate pilot set containing N/2 pilot sequences, and a collision rate of the contention access of two users is (2/N)^2 = 4/N^2. It may be seen that the collision rate of the latter is 4/N of the former. That is to say, when N is greater than 4, the collision rate of the latter is lower, and as N increases, the collision rate of the latter is lower and lower relative to that of the former. For example, when N=24, the collision rate of the latter is 1/6 of that of the former; when N=48, the collision rate of the latter is 1/12 of that of the former. Therefore, according to the "multi-pilot + data"-based contention grant-free scheme, the collision rate may be reduced, whereby a number of access users may be increased.

For a contention grant-free transmission, the "data" portion may still follow traditional processing procedures, including a channel encoding, a digital modulation, a resource mapping and sending, and the like. A combination with spreading may also be considered, and a digitally modulated symbol is spread by using a spreading sequence and then subjected to a resource mapping and sending. This is similar to spreading-based multiple access or code division multiple access. Therein, the spreading sequence used may be from an orthogonal or non-orthogonal spreading sequence set. By using the spreading sequence to spread a symbol, the diversity gain may be acquired to improve the user transmission performance, a number of access users may be improved through a code domain multiplexing, the inter-cell interference suppression is facilitated, and therefore the performance of the system is improved.

A traditional single-pilot-based contention grant-free scheme is easy to combine with spreading. For example, a one-to-one relationship or a multiple-to-one relationship may be established between a pilot sequence and a spreading sequence, each terminal determines a corresponding spreading sequence according to the selected pilot sequence and then the modulation symbol is spread by using the spreading sequence. When two terminals select a same pilot sequence, spreading sequences used by the two terminals are also the same. The receiver performs the pilot identification, and determines the spreading sequence used by the terminal according to the identified pilot sequence for data detection.

For a multi-pilot-based contention grant-free transmission scheme, a transmitter randomly selects multiple pilot sequences, and a receiver respectively utilizes multiple pilots to perform user identification and detection, so that when combined with spreading, since an association relationship between multiple independent or randomly selected pilots and spreading sequences cannot be directly established as the traditional scheme described above, there is a need to solve how to design a pilot sequence and establish an association relationship between the pilot sequence and the spreading sequence, and how the receiver determines the spreading sequence according to the identified pilot sequence.

In an embodiment, the data processing method provided in the present application includes that: two pilot sequences (i.e., two first sequences) are acquired; a spreading sequence (i.e. a second sequence) to be used is jointly determined according to the two pilot sequences; a processing is performed on the data by using the spreading sequence to generate data symbols to be sent; and the two pilot sequences and the data symbols are sent. Alternatively the data processing method may include: two pilot sequences P1 and P2 (i.e., two first sequences) are acquired; a spreading sequence (i.e., a second sequence) to be used is determined according to the pilot sequence P1 or the pilot sequence P2; a processing is performed on the data by using the spreading sequence to generate data symbols to be sent; and two pilot sequences and the data symbols are sent.

In this embodiment, the total overhead of time-frequency resources occupied by the pilots is 24 resource elements (RE). 2 pilots, i.e., P1 and P2 are used as an example. Pilot sequences of the two pilots come from a sequence set A, and the sequence set A includes 12 orthogonal sequences with a length of 12. Resources occupied by the 2 pilots may be time-division, or frequency-division, or time-frequency-division.

In this embodiment, the terminal firstly acquires two pilot sequences (i.e., two first sequences). The terminal randomly selects two sequences from the sequence set A as the pilot sequence P1 and the pilot sequence P2, respectively; and the pilot sequences P1 and P2 are each a sequence with a length of 12.

Combining 2 pilot sequences may be equivalent to a sequence with a length of 24. Since the sequence set A includes the 12 orthogonal sequences with a length of 12, from which 2 sequences are arbitrarily selected and then combined to obtain a combined sequence with a length of 24, then a total of 144 sequences with a length of 24 may be obtained. That is to say, a sequence set B including 144 sequences with a length of 24 may be obtained. Moreover, the sequence set B is a non-orthogonal sequence set. That the 2 sequences are combined includes that: the 2 sequences are combined in series or elements of the 2 sequences are combined according to a specified order. The spreading sequence (i.e., a second sequence) used by the terminal comes from a spreading sequence set C.

In one case, assuming that the spreading sequence set C includes 144 spreading sequences, the 144 sequences in the sequence set B may be made to be in one-to-one correspondence with the 144 spreading sequences in the spreading sequence set C.

In another case, there may be a multiple-to-one relationship between the sequences in the sequence set B and the sequences in the spreading sequence set C. For example, assuming that 36 sequences are included in the spreading sequence set C, 4 sequences in the sequence set B may be made to correspond to 1 sequence in the spreading sequence set C.

Thus, assuming that the sequence set B contains M sequences and the spreading sequence set C contains N sequences, X sequences in the sequence set B may be made to correspond to 1 sequence in the spreading sequence set C, where X = ceil(M/N), ceil() represents a round up, M, N, X are positive integers, and N is less than or equal to M. Then, X is greater than or equal to 1, that is to say, there is a one-to-one relationship or a multiple-to-one relationship between the sequences in the sequence set B and the sequences in the spreading sequence set C.

Moreover, mixed corresponding relationships may also be considered, for example, a relationship of X to 1 is between (M-N(X-1))^{∗}X sequences in the sequence set B and M-N(X-1) sequences in the sequence set C, and a relationship of (X-1) to 1 is between (N^{∗}X-M)^{∗}(X-1) sequences in the sequence set B and N^{∗}X-M sequences in the sequence set C.

In one case, assuming that 12 spreading sequences are included in the spreading sequence set C, 12 sequences in the sequence set B may correspond to 1 sequence in the spreading sequence set C. Because the sequence set A also contains 12 sequences, a specified sequence may be obtained from the sequence set A as the pilot sequence P1, and then any sequence is obtained from the sequence set A as the pilot sequence P2, the pilot sequence P2 has 12 possibilities, and the combination of both may generate 12 sequences in the sequence set B, and the resulting 12 sequences may be made to correspond to 1 sequence in the spreading sequence set C, then it may be seen that this is effectively equivalent to the pilot sequence P1 corresponding to 1 sequence in the spreading sequence set C. Thus, in this case, where a number of sequences in the spreading sequence set C and a number of sequences in the sequence set A are the same, a corresponding relationship may be established between the sequences in the sequence set A and the sequences in the spreading sequence set C, or between the pilot sequence P1 or the pilot sequence P2 and the at least one sequence in the spreading sequence set C.

The terminal performs following operations: the terminal jointly determines a spreading sequence (i.e., a second sequence) to be used according to the acquired two pilot sequences, and the terminal determines a spreading sequence to be used according to an association relationship or a correspondence between a long sequence formed by the two pilot sequences and the spreading sequences in the spreading sequence set C; the terminal may determine an index of a long sequence formed by two pilot sequences in the sequence set B according to indexes of the two pilot sequences obtained from the sequence set A, then determine an index of a corresponding spreading sequence according to the index of the long sequence and the association relationship or the correspondence between the sequences in the sequence set B and the sequences in the spreading sequence set C, and thus determine the spreading sequence to be used.

When two pilot sequences randomly selected by two terminals are both the same, the spreading sequences used by the two terminals are the same.

Alternatively, the terminal performs an operation in which the terminal determines the spreading sequence to be used according to the acquired pilot sequence P1 or the pilot sequence P2.

When an association relationship or a correspondence exists between the pilot sequence P1 and the spreading sequences in the spreading sequence set C, the terminal determines the spreading sequence to be used according to the pilot sequence P1; and when pilot sequences P1 randomly selected by the two terminals are the same, spreading sequences used by the two terminals are also the same.

Alternatively, when the association relationship or the correspondence exists between the pilot sequence P2 and the spreading sequences in the spreading sequence set C, the terminal determines the spreading sequence to be used according to the pilot sequence P2; and when pilot sequences P2 randomly selected by the two terminals are the same, and spreading sequences used by the two terminals are also the same.

The sequences contained in the spreading sequence set C described above may be mutually orthogonal or non-orthogonal; the sequences may be a real number sequence or a complex number sequence; the sequences may be a non-sparse sequence or a sparse sequence and the like. Moreover, in order to improve transmission efficiency and reduce the complexity of the receiver, a spreading sequence with a shorter length, for example, a length of 4 or the like, may be employed. Then, the terminal performs a processing on the data using the determined spreading sequence to generate data symbols to be sent.

In one case, the terminal uses the determined spreading sequence to perform a spreading processing on the modulation symbol, i.e., the data symbol, and generates the data symbols to be sent. In another case, the determined spreading sequence is a sequence pattern indicating at least one position where the modulation symbol is mapped on transmission resources. In another case, the determined spreading sequence is one sequence pattern, the terminal determines or generates a sequence set or codebook according to the sequence pattern, and then the terminal uses the sequence set or codebook to modulate or map data bits, so as to generate the data symbols to be sent.

Finally, the terminal sends the acquired two pilot sequences and the generated data symbols to be sent.

The terminal maps the acquired two pilot sequences and the generated data symbols to be sent to the transmission resources, and then generates a transmitting signal to be sent.

In this embodiment, Table 1 is a set table of the sequence set A, the sequence set A may be an orthogonal Hadamard sequence set containing 12 sequences with a length of 12, as shown in Table 1. According to the above description of this embodiment, a non-orthogonal sequence set B containing 144 sequences with a length of 24 may be constructed based on the sequence set A shown in Table 1, and FIG. 1C is a schematic diagram of a CDF distribution of sequence cross-correlation values provided in the present application. Referring to FIG. 1C, about 85% of the sequence cross-correlation values are 0 and about 15% of the sequence cross-correlation values are 0.5.

**Table 1 set table of sequence set A**

| Sequence index | Sequence element index and sequence element | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| 1 | 1 | 1 | 1 | 1 | 1 | 1 | 1 | 1 | 1 | 1 | 1 | 1 |
| 2 | 1 | -1 | 1 | -1 | 1 | 1 | 1 | -1 | -1 | -1 | 1 | -1 |
| 3 | 1 | -1 | -1 | 1 | -1 | 1 | 1 | 1 | -1 | -1 | -1 | 1 |
| 4 | 1 | 1 | -1 | -1 | 1 | -1 | 1 | 1 | 1 | -1 | -1 | -1 |
| 5 | 1 | -1 | 1 | -1 | -1 | 1 | -1 | 1 | 1 | 1 | -1 | -1 |
| 6 | 1 | -1 | -1 | 1 | -1 | -1 | 1 | -1 | 1 | 1 | 1 | -1 |
| 7 | 1 | -1 | -1 | -1 | 1 | -1 | -1 | 1 | -1 | 1 | 1 | 1 |
| 8 | 1 | 1 | -1 | -1 | -1 | 1 | -1 | -1 | 1 | -1 | 1 | 1 |
| 9 | 1 | 1 | 1 | -1 | -1 | -1 | 1 | -1 | -1 | 1 | -1 | 1 |
| 10 | 1 | 1 | 1 | 1 | -1 | -1 | -1 | 1 | -1 | -1 | 1 | -1 |
| 11 | 1 | -1 | 1 | 1 | 1 | -1 | -1 | -1 | 1 | -1 | -1 | 1 |
| 12 | 1 | 1 | -1 | 1 | 1 | 1 | -1 | -1 | -1 | 1 | -1 | -1 |

In this embodiment, Table 2 is a set table of another sequence set A, and a pilot sequence set, i.e., the sequence set A may also be a sequence set as shown in Table 2, the sequence set also includes 12 orthogonal sequences with a length of 12, each sequence is sparse, and the sequence set may be regarded as being formed by combining a comb-shaped structure containing 3 combs and an orthogonal Hadamard sequence set containing 4 sequences with a length of 4. According to the above description of this embodiment, for the sequence set A shown in Table 2, it is also possible to construct a set B including 144 non-orthogonal sequences with a length of 24 whose cross-correlation features between the sequences are the same as those shown in FIG. 1C described above, that is to say, the cross-correlation features are the same as those of the non-orthogonal sequence set B constructed based on the sequence set A shown in Table 1.

**Table 2 set table of another sequence set A**

| Sequence index | Sequence element index and sequence element | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| 1 | 1 | 1 | 1 | 1 | 0 | 0 | 0 | 0 | 0 | 0 | 0 | 0 |
| 2 | 1 | -1 | 1 | -1 | 0 | 0 | 0 | 0 | 0 | 0 | 0 | 0 |
| 3 | 1 | 1 | -1 | -1 | 0 | 0 | 0 | 0 | 0 | 0 | 0 | 0 |
| 4 | 1 | -1 | -1 | 1 | 0 | 0 | 0 | 0 | 0 | 0 | 0 | 0 |
| 5 | 0 | 0 | 0 | 0 | 1 | 1 | 1 | 1 | 0 | 0 | 0 | 0 |
| 6 | 0 | 0 | 0 | 0 | 1 | -1 | 1 | -1 | 0 | 0 | 0 | 0 |
| 7 | 0 | 0 | 0 | 0 | 1 | 1 | -1 | -1 | 0 | 0 | 0 | 0 |
| 8 | 0 | 0 | 0 | 0 | 1 | -1 | -1 | 1 | 0 | 0 | 0 | 0 |
| 9 | 0 | 0 | 0 | 0 | 0 | 0 | 0 | 0 | 1 | 1 | 1 | 1 |
| 10 | 0 | 0 | 0 | 0 | 0 | 0 | 0 | 0 | 1 | -1 | 1 | -1 |
| 11 | 0 | 0 | 0 | 0 | 0 | 0 | 0 | 0 | 1 | 1 | -1 | -1 |
| 12 | 0 | 0 | 0 | 0 | 0 | 0 | 0 | 0 | 1 | -1 | -1 | 1 |

In this embodiment, the non-orthogonal sequence set B is obtained by combining two (identical) orthogonal sequence sets, where most of the sequences are still orthogonal to each other, and the sequence cross-correlation values are overall low, and overall the non-orthogonal sequence set B has a good sequence structure feature and cross-correlation feature.

For the pilot sequence set A shown in Table 2, the candidate pilot set may be considered to contain a candidate pilot resource and a sequence in the orthogonal sequence set. Thus, in the present embodiment, the pilot sequence and the pilot may generally be considered equivalent, and the description for the pilot sequence in the above description may also generally be substituted for the description for the pilot, without limitation in the present embodiment.

In this embodiment, the sequence set A may also be another orthogonal sequence set or a non-orthogonal sequence set, for example, the sequence set A may be a sequence set formed by combining a comb-shaped resource structure containing 6 combs and an orthogonal Hadamard sequence set containing 2 sequences with a length of 2; or may be a ZC (Zadoff - Chu) sequence set; or may be a four-phase sequence set, for example, sequence elements come from a set {1+1i, -1+1i, -1-1i, 1-1i} or {1, 1i, -1, -1i}, it may be seen that candidate sequence elements have 4 phase values and thus may be referred to as a four-phase sequence set.

In this embodiment, the UE uses multiple pilot sequences, and when multiple UEs use a same time-frequency resource for transmission, pilot collision probability is low. In this embodiment, by means of the design of the multiple pilot sequences and the design of an association relationship or a correspondence between the multiple pilot sequences and the spreading sequence, the UE may determine a spreading sequence used by the UE according to multiple pilots used by the UE, and the UE is able to spread and transmit the data symbol by using the spreading sequence, so that the diversity gain may be acquired, and the transmission performance of the user is improved. The receiver may perform a receiving detection of data by identifying a joint pilot sequence used by the UE and determining the spreading sequence used by the UE accordingly. Moreover, in this embodiment, a joint pilot sequence (i.e., a combined sequence) is composed of multiple pilot sequences, it may be considered that the joint pilot sequence comes from a non-orthogonal sequence set having a greater number of sequences, and the non-orthogonal sequence set has a good sequence structure feature and cross-correlation feature, that is to say, the joint pilot sequences used by multiple UEs come from the non-orthogonal sequence set, are non-orthogonal, and have a low collision probability, and the receiver may utilize the non-orthogonal sequence set and its good sequence structure feature and cross-correlation feature to perform a receiving detection so as to obtain the good reception detection performance. From the system perspective, in this embodiment, the spread data symbols of multiple UEs may be transmitted in the same time-frequency resource, the code domain multiplexing may be realized, the increasing of the number of access users is facilitated, inter-cell interference suppression is also facilitated, and thus the performance of the system may be improved.

In an embodiment, the total time-frequency resource overhead occupied by the pilots is 24 resource elements. 2 pilots P1 and P2 are used as an example. Pilot sequences P1 and P2 (one pilot sequence is a first sequence) of 2 pilots come from the sequence set A1 and the sequence set A2, respectively. Where the sequence set A1 includes 12 orthogonal sequences with a length of 12, and the sequence set A2 includes 12 orthogonal sequences with a length of 12. Resources occupied by the 2 pilots may be time-division, or frequency-division, or time-frequency- division.

In this embodiment, the terminal firstly acquires two pilot sequences (i.e., two first sequences). The terminal randomly selects a sequence from the sequence set A1 as the pilot sequence P1, and randomly selects a sequence from the sequence set A2 as the pilot sequence P2; and the pilot sequences P1 and P2 are each a sequence with a length of 12.

A sequence set B is obtained by combining any one of the sequences in the sequence set A1 with any one of the sequences in the sequence set A2, and the sequence set B includes 144 sequences with a length of 24. Moreover, the sequence set B is a non-orthogonal sequence set.

The spreading sequence (i.e., the second sequence) used by the terminal comes from a spreading sequence set C. The sequences in the sequence set B may be made to be in one-to-one correspondence with the sequences in the spreading sequence set C, or a multiple-to-one relationship between the sequences in the sequence set B and the sequences in the spreading sequence set C. A correspondence may also be established between the sequences in the sequence set A1 or A2 and the sequences in the spreading sequence set C, or between the pilot sequence P1 or the pilot sequence P2 and the at least one sequence in the spreading sequence set C.

Then, the terminal performs following operations: the terminal jointly determines a spreading sequence to be used according to the acquired two pilot sequences; or, the terminal determines a spreading sequence to be used according to the acquired pilot sequence P1 or the pilot sequence P2.

Then, the terminal performs a processing on the data by using the determined spreading sequence so as to generate data symbols to be sent. Finally, the terminal sends the acquired two pilot sequences and the generated data symbols to be sent.

In an embodiment, the total overhead of time-frequency resources occupied by the pilots is 24 resource elements. 2 pilots, i.e., P1 and P2 are used as an example. The pilot sequence P1 comes from the sequence set A1, and the pilot sequence P2 comes from the sequence set A2. Moreover, the sequence set A1 and the sequence set A2 come from the sequence set A and include half of the sequences and the other half of the sequences in the sequence set A, respectively. For example, the sequence set A includes 24 orthogonal sequences with a length of 24, the sequence set A1 is a sequence set composed of first 12 sequences in the sequence set A, and the sequence set A2 is a sequence set composed of last 12 sequences in the sequence set A. Then, the sequence set A1 contains 12 orthogonal sequences with a length of 24, and the sequence set A2 also contains 12 orthogonal sequences with a length of 24.

In this embodiment, the sequence set A1 and the sequence set A2 include one half of the sequences and the other half of the sequences in the sequence set A, respectively, and are not limited to the first half of the sequences and the last half of the sequences in the sequence set A, and may be any half of the sequences and the other half of the sequences.

In this embodiment, a length of each of 2 pilot sequences is 24, so that the 2 pilots may occupy a same time-frequency resource, and the 2 pilots are code-divided.

In this embodiment, the terminal firstly acquires two pilot sequences (i.e., two first sequences). The terminal randomly selects a sequence from the sequence set A1 as the pilot sequence P1, and randomly selects a sequence from the sequence set A2 as the pilot sequence P2; and the pilot sequences P1 and P2 are each a sequence with a length of 24.

Since the 2 pilots are code-divided, they use a same time-frequency resource, then the 2 pilot sequences may be superposed and then mapped to the corresponding time-frequency resources for transmission, that is to say, a sum of the pilot sequences P1 and P2 is finally transmitted, and the sum of the pilot sequences P1 and P2 is also a sequence with a length of 24. The two pilot sequences may be performed a specified processing before a superposition processing, or the resulting sequences may be performed a specified processing after the superposition processing, where the specified processing includes an energy adjustment, an energy normalization, a power adjustment, an amplitude adjustment, a phase adjustment, a precoding, a scrambling, and the like.

Since the sequence set A1 includes 12 orthogonal sequences with a length of 24 and the sequence set A2 also includes 12 orthogonal sequences with a length of 24, 1 sequence is arbitrarily selected from each of the sequence set A1 and the sequence set A2 and then superimposed to obtain a sequence with a length of 24, then 144 sequences with a length of 24 may be obtained in total. That is to say, a sequence set B including 144 sequences with a length of 24 may be obtained. Moreover, the sequence set B is a non-orthogonal sequence set.

The spreading sequence used by the terminal comes from the spreading sequence set C. The sequences in the sequence set B may be made to be in one-to-one correspondence with the sequences in the spreading sequence set C, or in a multiple-to-one relationship between the sequences in the sequence set B and the sequences in the spreading sequence set C. A correspondence may also be established between the sequences in the sequence set A1 or A2 and the sequences in the spreading sequence set C, or between the pilot sequence P1 or the pilot sequence P2 and the at least one sequence in the spreading sequence set C.

Then, the terminal performs following operations: the terminal jointly determines a spreading sequence (i.e., a second sequence) to be used according to the acquired two pilot sequences (i.e., two first sequences); or, the terminal determines the spreading sequence to be used according to the acquired pilot sequence P1 or the pilot sequence P2.

Then, the terminal performs a processing on the data by using the determined spreading sequence so as to generate data symbols to be sent. Finally, the terminal sends the acquired two pilot sequences and the generated data symbols to be sent.

In this embodiment, Table 3 is a set table of yet another sequence set A, the sequence set A may be an orthogonal Hadamard sequence set containing 24 sequences with a length of 24, as shown in Table 3. According to the above description of this embodiment, the sequence set A1 may include first 12 sequences in the sequence set A, the sequence set A2 may include last 12 sequences in the sequence set A, and a non-orthogonal sequence set B containing 144 sequences with a length of 24 may be constructed from the sequence set A1 and the sequence set A2, and cross-correlation features between the sequences in this sequence set B are the same as those shown in FIG. 1C described above.

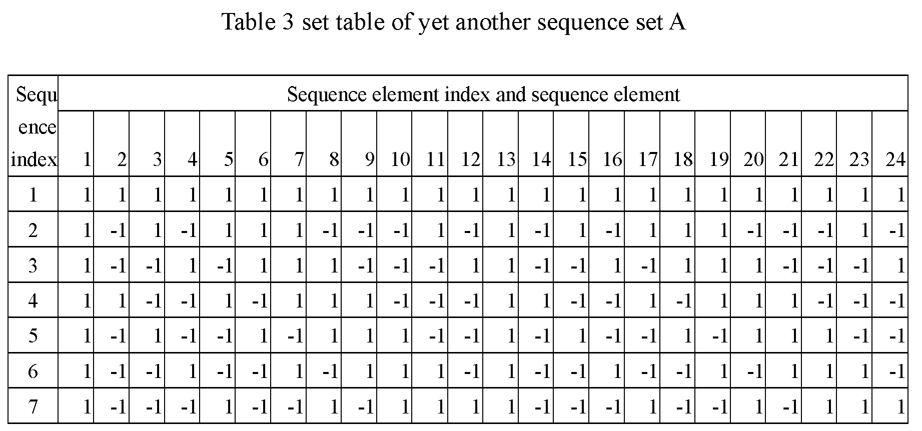

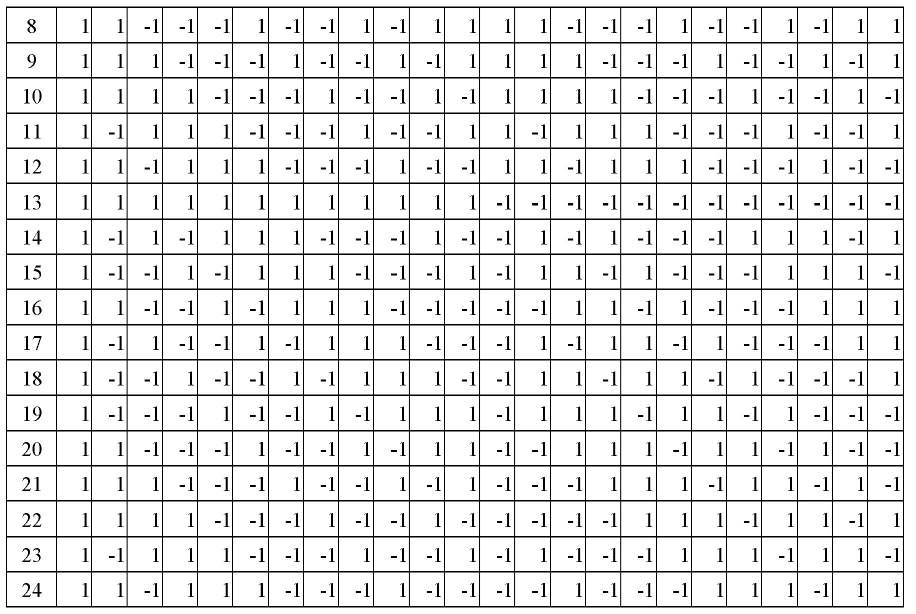

In this embodiment, Table 4 is a set table of yet another sequence set A, the sequence set A may also be a sequence set as shown in Table 4, the sequence set also includes 24 orthogonal sequences with a length of 24, and the sequence set may be regarded as being formed by combining a comb-shaped structure containing 3 combs and an orthogonal Hadamard sequence set containing 8 sequences with a length of 8. According to the above description of this embodiment, the sequence set A1 may include first 12 sequences in the sequence set A, the sequence set A2 may include last 12 sequences in the sequence set A, and a non-orthogonal sequence set B containing 144 sequences with a length of 24 may be constructed from the sequence set A1 and the sequence set A2, and cross-correlation features between the sequences in this sequence set B are the same as those shown in FIG. 1C described above.

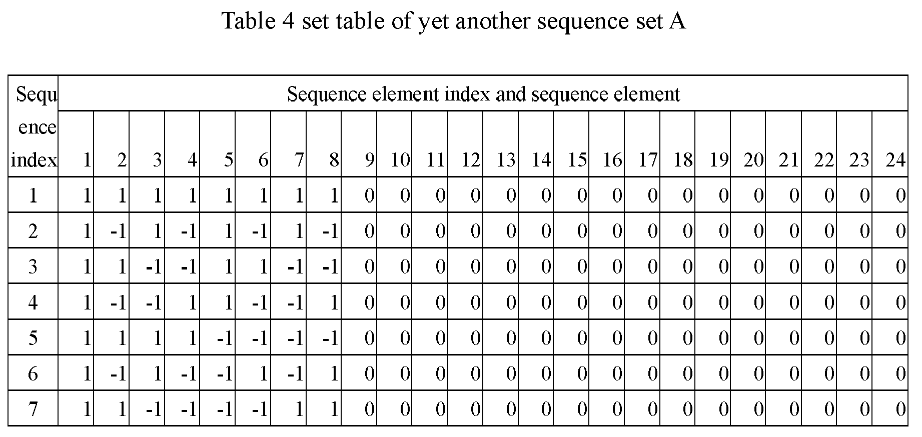

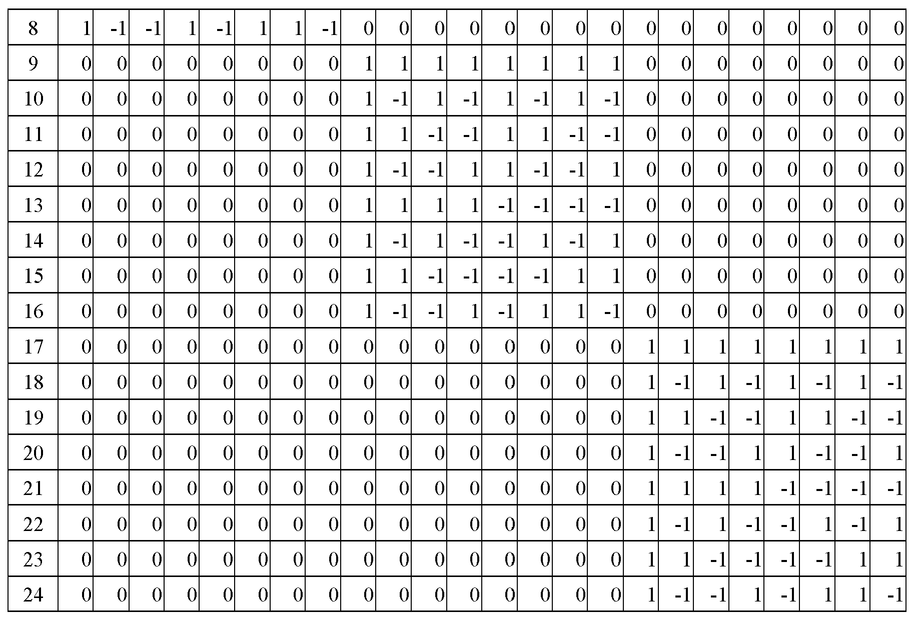

In this embodiment, if the total overhead of time-frequency resources occupied by the pilots is 48 resource elements, and the length of each of the 2 pilot sequences acquired by the terminal is 24, then the resources occupied by the 2 pilots may be time-division, frequency-division, or time-frequency-division.

A sequence set B is obtained by combining any one of the sequences in the sequence set A1 with any one of the sequences in the sequence set A2, and the sequence set B includes 144 sequences with a length of 48. Moreover, the sequence set B is a non-orthogonal sequence set.

The spreading sequence (i.e., the second sequence) used by the terminal comes from a spreading sequence set C. The sequences in the sequence set B may be made to be in one-to-one correspondence with the sequences in the spreading sequence set C, or a multiple-to-one relationship between the sequences in the sequence set B and the sequences in the spreading sequence set C. A correspondence may also be established between the sequences in the sequence set A1 or A2 and the sequences in the spreading sequence set C, or between the pilot sequence P1 or the pilot sequence P2 and the at least one sequence in the spreading sequence set C.

Then, the terminal performs following operations: the terminal jointly determines a spreading sequence (i.e., the second sequence) to be used according to the acquired two pilot sequences (i.e., two first sequences); or, the terminal determines the spreading sequence to be used according to the acquired pilot sequence P1 or the pilot sequence P2.

Then, the terminal performs a processing on the data by using the determined spreading sequence so as to generate data symbols to be sent. Finally, the terminal sends the acquired two pilot sequences and the generated data symbols to be sent.

In this case, the sequence set A may be an orthogonal Hadamard sequence set containing 24 sequences with a length of 24, as shown in Table 3. Then, the sequence set A1 may contain first 12 sequences in the sequence set A, and the sequence set A2 may contain last 12 sequences in the sequence set A, a non-orthogonal sequence set B containing 144 sequences with a length of 48 may be constructed from the sequence set A1 and the sequence set A2, and cross-correlation features between the sequences in this sequence set B are the same as those shown in FIG. 1C described above.

In this case, the sequence set A may also be a sequence set as shown in Table 4, the sequence set also contains 24 orthogonal sequences with a length of 24. Then, the sequence set A1 may contain first 12 sequences in the sequence set A, and the sequence set A2 may contain last 12 sequences in the sequence set A, a non-orthogonal sequence set B containing 144 sequences with a length of 48 may be constructed from the sequence set A1 and the sequence setA2, and cross-correlation features between the sequences in this sequence set B are the same as those shown in FIG. 1C described above.

In an embodiment, the total overhead of time-frequency resources occupied by the pilots is 24 resource elements. 2 pilots, i.e., P1 and P2 are used as an example. A pilot P1 consists of a sequence S1 and a sequence Y1, and a pilot P2 consists of a sequence S2 and a sequence Y2. The sequences S1 and S2 come from a sequence set S, and the sequences Y1 and Y2 come from a sequence set Y. For example, the sequence set S includes 12 orthogonal sequences with a length of 12, the sequence set Y includes 2 orthogonal sequences with a length of 2, and the first sequence in the sequence set Y is used as the sequence Y1 for the pilot P1, and the second sequence in the sequence set Y is used as the sequence Y2 for the pilot P2.

In this embodiment, the terminal firstly acquires two pilots, i.e., P1 and P2. It includes that: a sequence is selected randomly from the sequence set S as the sequence S1, the first sequence Y1 in the sequence set Y is acquired, and the pilot P1 is obtained according to the sequence S1 and the sequence Y1. The sequence S1 is a sequence with a length of 12, which may be represented as a vector of 12^{∗}1, the sequence Y1 is a sequence with a length of 2, which may be represented as a vector of 1^{∗}2, and a matrix multiplication is performed on the sequence S1 and the sequence Y1 to obtain a matrix of 12^{∗}2 as the pilot P1, the matrix may be converted into a sequence with a length of 24 as pilot sequence (i.e., a first sequence) used by the pilot P1. Similarly, the pilot P2 and a pilot sequence used by the pilot P2 may be obtained. The pilot sequences P1 and P2 are a sequence with a length of 24, respectively.

In this embodiment, the sequence Y1 and the sequence Y2 may be referred to as orthogonal cover codes, and the sequence set Y may be referred to as an orthogonal cover code set.

In this embodiment, if a length of each of 2 pilot sequences is 24, then the 2 pilot sequences may occupy a same time-frequency resource, and the 2 pilots are code-divided. The 2 pilot sequences may be superimposed and then mapped to corresponding time-frequency resources for transmission.

As can be seen from the above description, each sequence in the sequence set S may be operated with the first sequence Y1 in the sequence set Y to obtain a new sequence set A1, which is equivalent to including 12 orthogonal sequences with a length of 24, and similarly, each sequence in the sequence set S may be operated with the second sequence Y2 in the sequence set Y to obtain a new sequence set A2, which is also equivalent to including 12 orthogonal sequences with a length of 24. Then, it may be equivalent that the pilot sequence P1 comes from the sequence set A1 and the pilot sequence P2 comes from the sequence set A2.

In fact, in this embodiment, any sequence in the sequence set S and any sequence in the sequence set Y may be operated to obtain a sequence with a length of 24, and a total of 24 orthogonal sequences with a length of 24 may be obtained, and these 24 sequences may constitute the sequence set A. Then, the above-described sequence sets A1 and A2 may be regarded as coming from the sequence set A, and include one half of the sequences and the other half of the sequence in the sequence set A, respectively.

In this embodiment, when the terminal acquires two pilots P1 and P2, the terminal may also randomly select one sequence from one half of the sequences of the sequence set S as the sequence S1, randomly select one sequence from the sequence set Y as the sequence Y1, and acquire the pilot P1 according to the sequences S1 and Y1; similarly, a sequence is randomly selected from the other half of the sequences of the sequence set S as the sequence S2, and a sequence is randomly selected from the sequence set Y as the sequence Y2, and the pilot P2 is acquired according to the sequence S2 and the sequence Y2.

Any sequence in the sequence set A1 and any sequence in the sequence set A2 are superposed to obtain a sequence set B, and the sequence set B includes 144 sequences with a length of 24. Moreover, the sequence set B is a non-orthogonal sequence set.

The spreading sequence used by the terminal comes from a spreading sequence set C. The sequence in the sequence set B may be made to be in one-to-one correspondence with the sequences in the spreading sequence set C, or a multiple-to-one relationship between the sequences in the sequence set B and the sequences in the spreading sequence set C. A correspondence may also be established between the sequences in the sequence set A1 or A2 and the sequences in the spreading sequence set C, or between the pilot sequence P1 or the pilot sequence P2 and the at least one sequence in the spreading sequence set C.

Then, the terminal performs following operations: the terminal jointly determines a spreading sequence to be used according to the acquired two pilot sequences; or, the terminal determines a spreading sequence to be used according to the acquired pilot sequence P1 or the pilot sequence P2.

Then, the terminal performs a processing on the data by using the determined spreading sequence so as to generate data symbols to be sent. Finally, the terminal sends the acquired two pilot sequences and the generated data symbols to be sent.

In this embodiment, the sequence set S may be an orthogonal Hadamard sequence set containing 12 sequences with a length of 12 as shown in Table 1, or an orthogonal sequence set containing 12 sequences with a length of 12 as shown in Table 2. Table 5 is a set table of the sequence set Y, and the sequence set Y is shown in Table 5.

According to the above description of this embodiment, the sequence set A1 and the sequence set A2 respectively contain 12 sequences with a length of 24; and a non-orthogonal sequence set B containing 144 sequences with a length of 24 may be constructed from the sequence set A1 and the sequence set A2, and cross-correlation features between the sequences in this sequence set B are the same as those shown in FIG. 1C described above.

**Table 5 set Table of sequence set Y**

| Sequence index | Sequence element index and sequence element | |
|---|---|---|
| | 1 | 2 |
| 1 | 1 | 1 |
| 2 | 1 | -1 |

In this embodiment, if the total overhead of the time-frequency resources occupied by the pilots is 48 resource elements, and the length of each of the 2 pilot sequences acquired by the terminal is 24, then the resources occupied by the 2 pilots may be time-divided, frequency-divided or time-frequency-divided.

A sequence set B is obtained by combining any one of the sequences in the sequence set A1 with any one of the sequences in the sequence set A2, and the sequence set B includes 144 sequences with a length of 48. Moreover, the sequence set B is a non-orthogonal sequence set.

The spreading sequence used by the terminal comes from a spreading sequence set C. The sequences in the sequence set B may be made to be in one-to-one correspondence with the sequences in the spreading sequence set C, or a multiple-to-one relationship between the sequences in the sequence set B and the sequences in the spreading sequence set C. A correspondence may also be established between the sequences in the sequence set A1 or A2 and the sequences in the spreading sequence set C, or between the pilot sequence P1 or the pilot sequence P2 and the at least one sequence in the spreading sequence set C.

Then, the terminal performs following operations: the terminal jointly determines a spreading sequence (i.e., the second sequence) to be used according to the acquired two pilot sequences (i.e., the first sequences); or, the terminal determines the spreading sequence to be used according to the acquired pilot sequence P1 or the pilot sequence P2.

Then, the terminal performs a processing on the data by using the determined spreading sequence so as to generate data symbols to be sent. Finally, the terminal sends the acquired two pilot sequences and the generated data symbols to be sent.

In this case, the sequence set S may be an orthogonal Hadamard sequence set containing 12 sequences with a length of 12 shown in Table 1, or an orthogonal sequence set containing 12 sequences with a length of 12 shown in Table 2. The sequence set Y is shown in Table 5. Then, according to the above description of this embodiment, an equivalent sequence set A1 and an equivalent sequence set A2 may be obtained according to the sequence set S and the sequence set Y, and respectively contain 12 sequences with a length of 24; a non-orthogonal sequence set B containing 144 sequences with a length of 48 may be constructed according to the sequence set A1 and the sequence set A2, and the cross-correlation features between the sequences in the sequence set B are the same as those shown in FIG. 1C described above.

In an embodiment, the total overhead of time-frequency resources occupied by the pilots is 48 resource elements. 2 pilots, i.e., P1 and P2 are used as an example. Pilot sequences (i.e., the first sequences) of the 2 pilots come from a sequence set A, and the sequence set A includes 24 orthogonal sequences with a length of 24.

In this embodiment, resources occupied by the 2 pilots may be time-divided, frequency-divided, or time-frequency-divided.

In this embodiment, the terminal firstly acquires two pilot sequences. The terminal randomly selects two sequences from the sequence set A as the pilot sequence P1 and the pilot sequence P2, respectively. The pilot sequences P1 and P2 are each a sequence with a length of 24.

A sequence set B is obtained by combining any two of the sequences in the sequence set A, and the sequence set B includes 576 sequences with a length of 48. Moreover, the sequence set B is a non-orthogonal sequence set.

The spreading sequence used by the terminal comes from a spreading sequence set C. The sequences in the sequence set B may be made to be in one-to-one correspondence with the sequences in the spreading sequence set C, or a multiple-to-one relationship between the sequences in the sequence set B and the sequences in the spreading sequence set C. A correspondence may also be established between the sequences in the sequence set A and the sequences in the spreading sequence set C, or between the pilot sequence P1 or the pilot sequence P2 and the at least one sequence in the spreading sequence set C.

Then, the terminal performs following operations: the terminal jointly determines a spreading sequence to be used according to the acquired two pilot sequences; or, the terminal determines a spreading sequence to be used according to the acquired pilot sequence P1 or the pilot sequence P2.

Then, the terminal performs a processing on the data by using the determined spreading sequence to generate data symbols to be sent.

Finally, the terminal sends the acquired two pilot sequences and the generated data symbols to be sent.

In this embodiment, the sequence set A may be an orthogonal Hadamard sequence set containing 24 sequences with a length of 24, as shown in Table 3. According to the above description of this embodiment, an non-orthogonal sequence set B containing 576 sequences with a length of 48 may be constructed based on the sequence set A shown in Table 3, FIG. ID is a schematic diagram of another CDF distribution of sequence cross-correlation values provided in the present application, the CDF distribution of the cross-correlation values between its various sequences is shown in FIG. ID, and it may be seen from the cumulative distribution function (CDF) and the cross-correlation values that 92% of the sequence cross-correlation values are 0, 8% of the sequence cross-correlation values are 0.5.

In this embodiment, the sequence set A may also be a sequence set shown in Table 4, which also contains 24 orthogonal sequences with a length of 24. According to the above description of this embodiment, a non-orthogonal sequence set B containing 576 sequences with a length of 48 may be constructed based on the sequence set A shown in Table 4, and cross-correlation features between the sequences in this sequence set B are the same as those shown in FIG. ID described above.

Other extended embodiments may be obtained based on this embodiment and the above embodiments, and are not limited herein.

In an embodiment, the data processing method provided in the present application includes the following:
Multiple pilot sequences (i.e., N first sequences) are acquired; a second sequence is determined according to the multiple pilot sequences, or a second sequence is determined according to one of the multiple pilot sequences; a processing is performed on data by using the second sequence to generate data symbols to be sent; and the multiple pilot sequences and data symbols are sent.

The multiple pilot sequences are the pilot sequences used by multiple pilots.

That the multiple pilot sequences are acquired includes one of: the multiple pilot sequences are randomly selected or randomly generated; or multiple sequences are randomly selected or randomly generated, and a specified processing is performed on the multiple sequences to obtain the multiple pilot sequences.

The multiple pilot sequences come from one sequence set, or from multiple sequence sets, or from multiple sub-sequence sets of one sequence set, or are generated according to a preset rule.

The sequence set includes: a Hadamard sequence set; or a sequence set obtained according to the Hadamard sequence set; or a ZC sequence set; or a four-phase sequence set.

That the second sequence is determined according to the multiple pilot sequences includes: a joint pilot sequence (i.e., a combined sequence) is acquired according to the multiple pilot sequences, and the second sequence is determined through the acquired joint pilot sequence according to an association relationship or a correspondence between a joint pilot sequence set and a second sequence set.

That the joint pilot sequence is acquired according to the multiple pilot sequences includes: a serial combination processing or a superposition processing is performed on the multiple pilot sequences to obtain the joint pilot sequence.

That the serial combination processing is performed on the multiple pilot sequences includes: a sequence series connection is performed on the multiple pilot sequences, or elements of the multiple pilot sequences are combined in series according to a specified order.

That the second sequence is determined according to the one of the multiple pilot sequences includes that: the second sequence is determined through the pilot sequence according to an association relationship or a correspondence between a sequence set to which the one of the multiple pilot sequences belongs and the second sequence set; or the second sequence is determined according to an association relationship or a correspondence between the one of the multiple pilot sequences and a sequence in the second sequence set.

That the processing is performed on the data by using the second sequence to generate the data symbols to be sent includes: a spreading processing, or a modulation processing, or a mapping processing is performed on a data bit or a data symbol by using the second sequence to generate the data symbols to be sent.

That the multiple pilot sequences are sent includes: the multiple pilot sequences are mapped to transmission resources for sending; or, the multiple pilot sequences are combined to obtain a combined pilot sequence and then the combined pilot sequence is mapped to a transmission resource, or a specified processing is performed on the multiple pilot sequences and the processed sequences are mapped to transmission resources for sending, where the combined processing at least includes a series combination processing or a superposition processing, the specified processing includes at least one of a scrambling processing, an energy adjustment, a power adjustment, an amplitude adjustment, a phase adjustment, or a precoding processing.

The transmission resources used by the multiple pilot sequences are time-divided, or frequency-divided, or time-frequency-divided, or code-divided.

The transmission resources used by the multiple pilots are randomly selected or preset.

That the data symbols are sent includes: the data symbols are mapped to the transmission resources for sending; or a specified processing is performed on the data symbols and the processed data symbols are mapped to the transmission resources for sending, where the specified processing includes at least one of a scrambling processing, an energy adjustment, a power adjustment, an amplitude adjustment, a phase adjustment, or a precoding processing.

The method further includes: information is carried in the data, where the information includes identification information of the multiple pilot sequences, such as generation information, index information; the information further includes identification information of the second sequence; the information further includes identification information of the first communication node; and the information further includes energy information of the multiple pilot sequences or energy information of at least one pilot sequence.

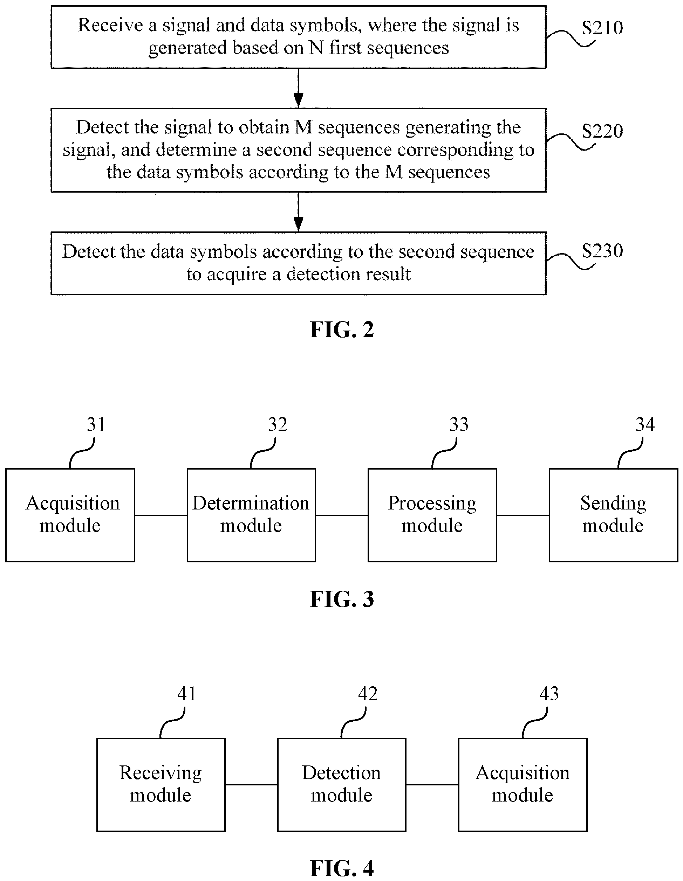

The present application provides a data processing method. FIG. 2 is a flowchart of another data processing method provided in the present application. This method may be integrated into a data processing apparatus, the data processing apparatus may be implemented by software and/or hardware, and generally integrated into a second communication node, and the second communication node may be a base station.

As shown in FIG. 2, the data processing apparatus provided in the present application includes S210, S220 and S230.

In S210, a signal and data symbols are received, where the signal is generated based on N first sequences.

The signal may be at least one signal generated by mapping N first sequences to different transmission resources; or a signal generated by combining N first sequences to obtain a combined sequence and mapping the combined sequence to a transmission resource.

The at least one signal and the data symbols may be sent by a first communication node.

In S220, the signal is detected to obtain M sequences generating the signal, and a second sequence corresponding to the data symbols is determined according to the M sequences.

In this process, when the signal is detected, the signal is detected based on a combined sequence set or a sequence set to which at least one first sequence of the N first sequences belongs, so as to obtain the M sequences generating the signal. The M sequences may be a combined sequence obtained from the N first sequences; may also be one first sequence; and may also be M first sequences.

When the second sequence is determined, the second sequence may be determined based on a corresponding relationship between the M sequences and the second sequence.

In S230, the data symbols are detected according to the second sequence to acquire a detection result.

After the second sequence is determined, the data symbols are detected, an identity of the first communication node is determined based on the detection result, and an interference cancellation is performed.

For the details of this embodiment, reference may be made to the above embodiments, which are not described herein again.

The data processing method provided in the present application includes that:
the at least one signal and the data symbols are received, where the at least one signal is generated based on the N first sequences; the at least one signal is detected to obtain the M sequences generating the at least one signal, and the second sequence corresponding to the data symbols is determined according to the M sequences; and the data symbols are detected according to the second sequence to acquire the detection result; where N is an integer greater than or equal to 2, and M is an integer greater than or equal to 1. By using this method, the combination of multi-pilot and spreading transmission may be realized, whereby it is beneficial to improve the transmission performance of users and the performance of the system.

On the basis of the above-described embodiments, an extended embodiment of the above-described embodiments is proposed, and in order to make the description brief, only the differences from the above-described embodiments are described in the extended embodiment.

In an embodiment, that the signal is detected to obtain the M sequences generating the signal, and the second sequence corresponding to the data symbols is determined according to the M sequences includes: the signal is detected based on a combined sequence set to obtain the M sequences generating the signal, where the combined sequence set is determined based on at least one sequence set to which the N first sequences belong, and the M sequences include one combined sequence obtained from the N first sequences; and the second sequence corresponding to the data symbols is determined according to the combined sequence and a corresponding relationship between the combined sequence and the second sequence.

A determination means of the combined sequence set may refer to a technical means for the first communication node to determine the sequence set B, which is not limited herein.

When the signal is detected based on the combined sequence set, M sequences may be one combined sequence. This is for each UE. If there are multiple UEs, the receiver may obtain the combined sequences of multiple UEs through detection, that is to say, a combined sequence corresponding to each UE may be obtained, then as a whole, the receiver may detect and obtain multiple combined sequences.

In an embodiment, that the signal is detected to obtain the M sequences generating the signal, and the second sequence corresponding to the data symbols is determined according to the M sequences includes: the signal is detected based on a combined sequence set to obtain M sequences generating the signal, where the combined sequence set is determined based on at least one sequence set to which the N first sequences belong, and the M sequences include one combined sequence obtained from the N first sequences; the N first sequences are determined according to the combined sequence; and the second sequence corresponding to the data symbols is determined according to one first sequence of the N first sequences and a corresponding relationship between the first sequence and the second sequence.

The combined sequence set is determined based on the at least one sequence set to which the N first sequences belong. Correspondingly, a corresponding relationship between the combined sequence and the N first sequences may be determined. After the combined sequence is determined, N first sequences corresponding to the combined sequence may be determined directly, and the combined sequence may be generated by the N first sequences.

After the N first sequences are determined, the second sequence may be determined based on one first sequence of the N first sequences and a corresponding relationship between the first sequence and the second sequence.

In an embodiment, that the signal is detected to obtain the M sequences generating the signal, and the second sequence corresponding to the data symbols is determined according to the M sequences includes: the signal is detected based on a sequence set to which one first sequence of the N first sequences belongs to obtain the M sequences generating the signal, where the M sequences include the first sequence; and the second sequence corresponding to the data symbols is determined according to the first sequence and a corresponding relationship between the first sequence and the second sequence. The first sequence may be understood as a first sequence in the sequence set used to detect the signal. Due to the influence of the channel, the first sequence may not be the same as a first sequence actually used by a transmitting side.

When the signal is detected based on a sequence set to which one first sequence of the N first sequences belongs, the M sequences may be the first sequence. This is for each UE. If there are multiple UEs, the receiver may obtain the first sequences corresponding to the multiple UEs through similar detection methods, then, as a whole, the receiver may detect and obtain multiple first sequences.

In an embodiment, that the signal is detected to obtain the M sequences generating the signal, and the second sequence corresponding to the data symbols is determined according to the M sequences includes: the signal is detected based on at least one sequence set to which the N first sequences belong to obtain the M sequences generating the signal, and the M sequences include M first sequences; a combined sequence is determined according to the M first sequences; and the second sequence corresponding to the data symbols is determined according to the combined sequence and a corresponding relationship between the combined sequence and the second sequence.

For a UE, in one case, M is equal to N, that is, N sequences generating the signal are obtained, a combined sequence is determined according to the N sequences, similar to the description above; in another case, M is less than N, all possible combined sequences may be acquired by using the M first sequences by referring to the method for determining the combined sequence according to the N sequences. If there are multiple UEs, the receiver may obtain M first sequences corresponding to each UE by a similar detection method.

In an embodiment, the method further includes: a channel estimation is performed by using at least one sequence of the M sequences; or in a case where the M sequences include a combined sequence obtained from the N first sequences, the N first sequences are determined according to the combined sequence, and the channel estimation is performed by using at least one first sequence of the N first sequences.

In a case where the M sequences include the combined sequence obtained from the N first sequences, the combined sequence may be used for the channel estimation; in a case where the M sequences include a first sequence, the first sequence may be used for the channel estimation; in a case where the M sequences include M first sequences, the channel estimation may be performed by using at least one first sequence of the M first sequences, or the channel estimation may be performed by using at least one combined sequence obtained according to the M first sequences.

In an embodiment, the method further includes: information is acquired from the detection result, where the information includes one or more of: identification information of the N first sequences; energy information of at least one first sequence of the N first sequences; identification information of the second sequence; or identification information of a first communication node.

The present application is exemplarily described below, 2 pilots P1 and P2 are used as an example. The receiver acquires the received symbols for the 2 pilots and acquires the received data symbols.

The non-orthogonal sequence set B is constructed by the receiver in a manner similar to the transmitter, the acquired symbols of the 2 pilots are detected by using each sequence in the sequence set B, the joint pilot sequence (i.e., the combined sequence) used by the transmitter is identified, and then a spreading sequence (i.e., the second sequence) used by the transmitter is determined according to the identified joint pilot sequence so as to detect the received data symbols.

2 pilots are used jointly by the receiver to perform a user identification and detection, a spreading sequence used by the user is determined, then a channel estimation is performed by using the pilot sequences identified on the 2 pilots, or a channel estimation is performed by using the joint pilot sequence, and the received data symbols are detected according to the channel estimation result and the determined spreading sequence, and then it is demodulated and decoded.

When multiple users perform the contention grant-free access and transmission, the receiver also adopts an interference cancellation technology, in which the sending symbols of the users which are correctly demodulated and decoded are reconstructed, and interference cancellation is performed, then the receiver continues to detect other users.

In this embodiment, the implementation processes of the receiver include:
(1) Pilot identification is performed, and a spreading sequence used by the user is determined: the pilot identification may also be referred to as active user identification. A blind detection is performed by using the constructed non-orthogonal pilot sequence set B, and a joint pilot sequence with a correlation value greater than a specified threshold and/or several joint pilot sequences with the large correlation values are acquired as the at least one identified joint pilot sequence through a correlation detection. Then, the spreading sequence used by the user is determined by using the identified joint pilot sequence according to an association relationship or a correspondence between the joint pilot sequence and the spreading sequence. Alternatively, a blind detection is performed by using a sequence set to which the pilot sequence P1 and/or the pilot sequence P2 belong, and a pilot sequence with a correlation value greater than a specified threshold and/or several pilot sequences with the large correlation values are acquired as the identified pilot sequence P1 and/or the pilot sequence P2 through a correlation detection. Then, the spreading sequence used by the user is determined according to an association relationship or a correspondence between the pilot sequence P1 or the pilot sequence P2 and the spreading sequence. If the association relationship or the correspondence is established between the pilot sequence P1 and the spreading sequence, upon detecting by using the pilot sequence P1, the spreading sequence used by the user may be determined according to the pilot sequence P1, while upon detecting by using the pilot sequence P2, the spreading sequence used by the user may be determined according to the joint pilot sequence, or determined according to the combination or superposition of the pilot sequence P1 and the pilot sequence P2.
(2) A channel estimation is performed: the pilot sequence P1 and/or the pilot sequence P2 are determined according to the identified joint pilot sequence, and the channel estimation is performed by using the pilot sequence P1 and/or the pilot sequence P2; the pilot identification may also be performed directly on the pilot P1/pilot P2, and the channel estimation may be performed by using the pilot sequence identified on the pilot P1/pilot P2; the channel estimation may also be performed by using the identified joint pilot sequence. Since the joint pilot sequence is obtained by combining or superposing 2 pilot sequences, and the 2 pilot sequences may come from an orthogonal or non-orthogonal pilot sequence set, then the receiver may determine the 2 pilot sequences according to the identified joint pilot sequence, for example, the 2 pilot sequences constituting the joint pilot sequence may be determined according to an index of the joint pilot sequence and the size of the pilot sequence set through a division operation or a remainder operation.
(3) The received data symbols are detected: the detection is performed according to, for example, a minimum mean square error (MMSE) detection method based on the channel estimation result of the identified user and the corresponding spreading sequence so as to acquire the data detection result.
(4) A demodulation and decoding is performed: a data detection result of the identified users is demodulated and decoded, and whether the decoding is correct is determined according to a cyclic redundancy check (CRC) result. Because of the contention grant-free transmission, the data part may carry the identification information of the user, and the receiver may obtain the identity information of the user and the transmitted data after correctly decoding the data.
(5) A symbol reconstruction and interference cancellation is performed: for the user with a correct decoding, the bits output by decoding are encoded, modulated and spread again to obtain the sending symbols of the user, the received symbols are reconstructed by utilizing the channel estimation result, and then the symbols are subtracted from the received signal to realize the interference cancellation. The symbol reconstruction and interference cancellation include the reconstruction and interference cancellation on the data symbols and the 2 pilot symbols, so the information of the 2 pilots may be carried in the data part, such as the index information, the energy information of the 2 pilots. Moreover, the information of the spreading sequence may be carried in the data part. For the channel estimation result, the channel estimation result obtained based on the pilot in process (2) above may be used, it is also possible to perform a least square (LS) channel estimation by using reconstructed sending symbols of all users with correct decoding to obtain an updated channel estimation result, and the interference cancellation is performed based on the updated channel estimation result.
(6) A next identification and detection is performed: going back to the process (1) to perform the next round of identification and detection again. The iteration may continue until no user is identified and detected or until a specified number of iterations is reached.

For the 2 pilots, i.e., the pilot P1/pilot P2, some of the processing in the above processes may be performed on the 2 pilots, respectively, and may be performed in parallel or in serial. Where, if it is performed in parallel, after a pilot identification, a channel estimation and a data detection by using the pilot P1 and pilot P2, respectively, users with correct decoding may be obtained respectively, and then the interference cancellation may be performed on all users with correct decoding on the 2 pilots, in which it is possible that one user is decoded correctly on 2 pilots and the interference cancellation may be performed once. In a case of serial execution, the pilot identification, channel estimation and data detection may be firstly performed by using the pilot P1 to obtain the users correctly decoded, and the interference cancellation can be performed on all the users correctly decoded; then the pilot identification, channel estimation and data detection may be performed by using the pilot P2 to obtain the users correctly decoded, and the interference cancellation may be performed on all the users correctly decoded; then, the pilot P1 and the pilot P2 are sequentially used for the reception detection and interference cancellation again, so the iteration is done.

In an embodiment, the data processing method provided in the present application includes: received symbols of multiple pilots are acquired and received data symbols are acquired; the acquired symbols of multiple pilots are detected so as to identify a joint pilot sequence used by a transmitter; a second sequence used by the transmitter is determined according to the joint pilot sequence; and the received data symbols are detected according to the determined second sequence.

The method further includes that: pilot sequences used by the transmitter on multiple pilots are determined according to the identified joint pilot sequence (i.e., the combined sequence); or, the acquired symbols of multiple pilots are detected to determine the pilot sequences used by the transmitter on the multiple pilots.

That the acquired symbols of multiple pilots are detected so as to identify the joint pilot sequence used by the transmitter includes: the combined sequence set is acquired according to at least one sequence set used by the multiple pilots, and the acquired symbols of multiple pilots are detected so as to identify a joint pilot sequence used by the first communication node through the combined sequence set.

That the combined sequence set is acquired according to the at least one sequence set used by the multiple pilots includes: one sequence is selected arbitrarily for each of the multiple pilots from the at least one sequence set used by the multiple pilots so as to obtain multiple sequences, and a series combination processing or a superposition processing is performed on the multiple sequences to obtain the combined sequence set.

That the second sequence used by the transmitter is determined according to the joint pilot sequence includes: a spreading sequence, i.e., the second sequence is determined through the identified joint pilot sequence according to an association relationship or a correspondence between the joint pilot sequence set and the second sequence set.

The method further includes: a second sequence used by the transmitter is determined according to a pilot sequence used on one of the pilots; or a second sequence used by the transmitter is determined according to pilot sequences used by the transmitter on multiple pilots; or when one pilot is used for detection, a second sequence used by the transmitter is determined according to the pilot sequence used on the pilot, and when other pilots are used for detection, a second sequence used by the transmitter is determined according to the joint pilot sequence.

The method further includes: a channel estimation is performed by using at least one pilot sequence on at least one pilot according to the determined pilot sequences used by the transmitter on multiple pilots so as to detect the received data symbols; or a channel estimation is performed according to the determined joint pilot sequence used by the transmitter so as to detect the received data symbols.

The method further includes: After the received data symbols are detected according to the determined second sequence to obtain the detection result, the detection result is demodulated and decoded to obtain the data sent by the transmitter.

The method further includes: identity information of the transmitter, i.e., the first communication node, information of the pilot sequences used by the transmitter on the multiple pilots, i.e., identification information of the N first sequences, information of the second sequence used by the transmitter, i.e., identification information of the second sequence, is acquired from the acquired data sent by the transmitter.

The present application provides a data processing apparatus, and FIG. 3 is a schematic structural diagram of a data processing apparatus provided in the present application, the apparatus is configured at a first communication node, as shown in FIG. 3, the apparatus includes an acquisition module 31, a determination module 32, a processing module 33 and a sending module 34. The acquisition module 31 is configured to acquire N first sequences. The determination module 32 is configured to determine a second sequence according to at least one first sequence of the N first sequences. The processing module 33 is configured to perform a processing on data based on the second sequence to obtain data symbols. The sending module 34 is configured to send the N first sequences and the data symbols, where N is an integer greater than or equal to 2.

The data processing apparatus provided in this embodiment is used for implementing the data processing method in the embodiment shown in FIG. 1, and the implementation principle and technical effect of the data processing apparatus provided in this embodiment are similar to those of the data processing method in the embodiment shown in FIG. 1, and are not described herein again.

On the basis of the above-described embodiments, an extended embodiment of the above-described embodiments is proposed, and in order to make the description brief, only the differences from the above-described embodiments are described in the extended embodiment.

In an embodiment, the N first sequences are randomly acquired.

In an embodiment, the acquisition module 31 includes one of: the N first sequences are acquired from a sequence set, where any two sequences in the N first sequences are different, or T sequences in the N first sequences are the same, T is an integer larger than or equal to 2, and T is less than or equal to N; the N first sequences are acquired from different sequence sets; or the N first sequences are acquired from different subsets of a same sequence set.

In an embodiment, the sequence set includes one or more of: a Hadamard sequence set; a sequence set obtained according to the Hadamard sequence set; a ZC sequence set; or a four-phase sequence set.

In an embodiment, the determination module 32 is specifically configured to: determine a combined sequence according to the N first sequences; and determine the second sequence according to the combined sequence and a corresponding relationship between the combined sequence and the second sequence.

In an embodiment, the determination module 32 is specifically configured to: perform a series combination processing or a superposition processing on the N first sequences to obtain the combined sequence.

In an embodiment, the determination module 32 is specifically configured to: determine the second sequence according to one first sequence of the N first sequences and a corresponding relationship between the first sequence and the second sequence.

In an embodiment, a processing of the data based on the second sequence includes one of: a spreading processing; a modulation processing; or a mapping processing.

In an embodiment, The sending module 34 includes one of: the N first sequences are mapped to different transmission resources, at least one signal is generated and sent; or the N first sequences are combined to obtain a combined sequence and then the combined sequence is mapped to a transmission resource, a signal is generated and sent, where the combined processing includes a series combination processing or a superposition processing.

In an embodiment, one first sequence corresponds to one pilot.

In an embodiment, transmission resources used by pilots respectively corresponding to the N first sequences include one of: time division resources; frequency division resources; time-frequency division resources; code division resources; or randomly selected resources.

In an embodiment, the data carries information, and the information includes one or more of: identification information of the N first sequences; energy information of at least one first sequence of the N first sequences; identification information of the second sequence; or identification information of the first communication node.

The present application further provides a data processing apparatus, and FIG. 4 is a schematic structural diagram of another data processing apparatus provided in the present application, the apparatus is configured at a second communication node, referring to FIG. 4, the apparatus includes a receiving module 41, a detection module 42 and an acquisition module 43. The receiving module 41 is configured to receive a signal and data symbols, where the signal is generated based on N first sequences, and N is an integer greater than or equal to 2. The detection module 42 is configured to detect the signal to obtain M sequences generating the signal, and determine a second sequence corresponding to the data symbols according to the M sequences, where M is an integer greater than or equal to 1. The acquisition module 43 is configured to detect the data symbols according to the second sequence to acquire a detection result.

The data processing apparatus provided in this embodiment is used for implementing the data processing method in the embodiment shown in FIG. 2, and the implementation principle and technical effect of the data processing apparatus provided in this embodiment are similar to those of the data processing method in the embodiment shown in FIG. 2, and are not described herein again

On the basis of the above-described embodiments, an extended embodiment of the above-described embodiments is proposed, and in order to make the description brief, only the differences from the above-described embodiments are described in the extended embodiment.

In an embodiment, the detection module 42 is specifically configured to: detect the signal based on a combined sequence set to obtain the M sequences generating the signal, where the combined sequence set is determined based on at least one sequence set to which the N first sequences belong, and the M sequences include one combined sequence obtained from the N first sequences; and determine the second sequence corresponding to the data symbols according to the combined sequence and a corresponding relationship between the combined sequence and the second sequence.

In an embodiment, the detection module 42 is specifically configured to: detect the signal based on a combined sequence set to obtain M sequences generating the signal, where the combined sequence set is determined based on at least one sequence set to which the N first sequences belong, and the M sequences include one combined sequence obtained from the N first sequences; determine the N first sequences according to the combined sequence; and determine the second sequence corresponding to the data symbols according to one first sequence of the N first sequences and a corresponding relationship between the first sequence and the second sequence.

In an embodiment, the detection module 42 is specifically configured to: detect the signal based on a sequence set to which one first sequence of the N first sequences belongs to obtain the M sequences generating the signal, where the M sequences include the first sequence; and determine the second sequence corresponding to the data symbols according to the first sequence and a corresponding relationship between the first sequence and the second sequence.

In an embodiment, the detection module 42 is specifically configured to: detect the signal based on at least one sequence set to which the N first sequences belong to obtain the M sequences generating the signal, and the M sequences include M first sequences; determine a combined sequence according to the M first sequences; and determine the second sequence corresponding to the data symbols according to the combined sequence and a corresponding relationship between the combined sequence and the second sequence.

In an embodiment, the apparatus further includes a channel estimation module. The channel estimation module is configured to: perform a channel estimation by using at least one sequence of the M sequences; or determine the N first sequences according to the combined sequence, and perform a channel estimation by using at least one first sequence of the N first sequences in a case where the M sequences include a combined sequence obtained from the N first sequences.

In an embodiment, the apparatus further includes an information acquisition module. The information acquisition module is configured to: acquire information from the detection result, where the information includes one or more of: identification information of the N first sequences; energy information of at least one first sequence of the N first sequences; identification information of the second sequence; or identification information of a first communication node.

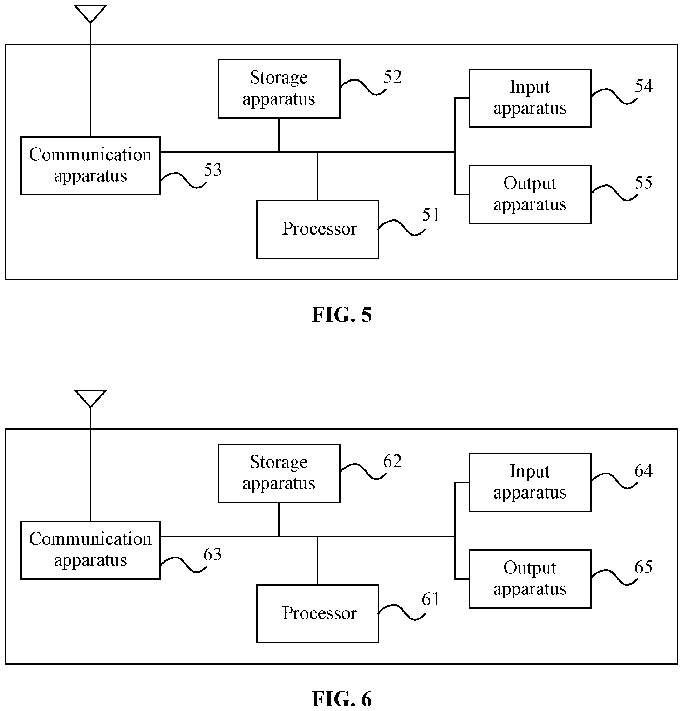

The present application provides a first communication node, and FIG. 5 is a schematic structural diagram of a first communication node provided in the present application, as shown in FIG. 5, the first communication node provided in the present application includes one or more processors 51 and a storage apparatus 52. The processor 51 in the first communication node may be one or more, one processor 51 is used as an example in FIG. 5. The storage apparatus 52 is configured to store one or more programs. The one or more programs are executed by the one or more processors 51 so that the one or more processors 51 implement the method described in FIG. 1 of the embodiments of the present application.

The first communication node further includes a communication apparatus 53, an input apparatus 54 and an output apparatus 55.

The processor 51, the storage apparatus 52, the communication apparatus 53, the input apparatus 54 and the output apparatus 55 in the first communication node may be connected via a bus or in other manners, they being connected via the bus is used as an example in FIG. 5.

The input apparatus 54 may be configured to receive input numeric or character information and to generate a key signal input related to user settings and functional controls of the first communication node. The output apparatus 55 may include a display device such as a display screen.

The communication apparatus 53 may include a receiver and a sender. The communication apparatus 53 is configured to perform an information transceiving communication according to the control of the processor 51. The information includes, but is not limited to, N first sequences and data symbols.

As a computer-readable storage medium, the storage apparatus 52 may be configured to store a software program, a computer executable program, and a module, such as a program instruction/module corresponding to the method in FIG. 1 of the embodiments of the present application (the acquisition module 31, the determination module 32, the processing module 33, and the sending module 34 in the data processing apparatus). The storage apparatus 52 includes a storage program region and a storage data region, where the storage program region may store an operating system, an application program required for at least one function; the storage data region may store data or the like created according to the use of the first communication node. Moreover, the storage apparatus 52 may include a high-speed random access memory and may also include a non-volatile memory, such as at least one magnetic disk storage device, a flash memory device, or other non-volatile solid-state memory device. In some instances, the storage apparatus 52 may further include a memory disposed remotely with respect to the processor 51, the remote memory may be connected to the first communication node over a network. Instances of networks described above include, but are not limited to, the Internet, an intranet, a local area network, a mobile communication network, and combinations thereof.

The present application provides a second communication node, and FIG. 6 is a schematic structural diagram of a second communication node provided in the present application, as shown in FIG. 6, the second communication node provided in the present application includes one or more processors 61 and a storage apparatus 62. The processor 61 in the second communication node may be one or more, one processor 61 is used as an example in FIG. 6. The storage apparatus 62 is configured to store one or more programs. The one or more programs are executed by the one or more processors 61 so that the one or more processors 61 implement the method described in FIG. 2 of the embodiments of the present application.

The second communication node further includes a communication apparatus 63, an input apparatus 64 and an output apparatus 65.

The processor 61, the storage apparatus 62, the communication apparatus 63, the input apparatus 64 and the output apparatus 65 in the second communication node may be connected via a bus or in other manners, they being connected via the bus is used as an example in FIG. 6.

The input apparatus 64 may be configured to receive input numeric or character information and to generate a key signal input related to user settings and functional controls of the second communication node. The output apparatus 65 may include a display device such as a display screen.

The communication apparatus 63 may include a receiver and a sender. The communication apparatus 63 is configured to perform an information transceiving communication according to the control of the processor 61.

As a computer-readable storage medium, the storage apparatus 62 may be configured to store a software program, a computer executable program, and a module, such as a program instruction/module corresponding to the method in FIG. 2 of the embodiments of the present application (the receiving module 41, the detection module 42 and the acquisition module 43 in the data processing apparatus). The storage apparatus 62 includes a storage program region and a storage data region, where the storage program region may store an operating system, an application program required for at least one function; the storage data region may store data or the like created according to the use of the second communication node. Moreover, the storage apparatus 62 may include a high-speed random access memory and may also include a non-volatile memory, such as at least one magnetic disk storage device, a flash memory device, or other non-volatile solid-state memory device. In some instances, the storage apparatus 62 may further include a memory disposed remotely with respect to the processor 61, the remote memory may be connected to the second communication node over a network. Instances of networks described above include, but are not limited to, the Internet, an intranet, a local area network, a mobile communication network, and combinations thereof.

An embodiment of the present embodiment further provides a storage medium. The storage medium stores a computer program. The computer program, when executed by a processor, implements the data processing method described in any one of the embodiments of the present application, such as the data processing method applied to the first communication node and the data processing method applied to the second communication node. The data processing method applied to the first communication node includes that: N first sequences are acquired; a second sequence is determined according to at least one first sequence of the N first sequences; data is processed based on the second sequence to obtain data symbols; and the N first sequences and the data symbols are sent; where N is an integer greater than or equal to 2.

The data processing method applied to the second communication node that: a signal and data symbols are received, where the signal is generated based on N first sequences; the signal is detected to obtain M sequences generating the signal, and a second sequence corresponding to the data symbols is determined according to the M sequences; and the data symbols are detected according to the second sequence to acquire a detection result; where N is an integer greater than or equal to 2, and M is an integer greater than or equal to 1.

The computer storage medium of the embodiments of the present application may adopt any combination of one or more computer readable media. The computer readable medium may be a computer readable signal medium or a computer readable storage medium. The computer readable storage medium may be, for example, but not limited to, an electronic, magnetic, optical, electromagnetic, infrared, or semiconductor system, apparatus, or device, or any combination of the foregoing. Examples (a non-exhaustive list) of the computer readable storage medium include: an electrical connection having one or more wires, a portable computer diskette, a hard disk, a random access memory (RAM), a read only memory (ROM), an erasable programmable read only memory (EPROM), a flash memory, an optical fiber, a portable CD-ROM, an optical storage device, a magnetic storage device, or any suitable combination of the foregoing. A computer readable storage medium may be any tangible medium that may contain, or store a program for use by or in connection with an instruction execution system, apparatus, or device.

A computer readable signal medium may include a propagated data signal with a computer readable program code carried therein, for example, in a baseband or as part of a carrier wave. Such a propagated data signal may adopt a variety of forms, including, but not limited to: an electromagnetic signal, an optical signal, or any suitable combination of the foregoing. The computer readable signal medium may be any computer readable medium that is not a computer readable storage medium and that may transmit, propagate, or transport a program for use by or in connection with an instruction execution system, apparatus, or device.

Program codes embodied on the computer readable medium may be transmitted using any appropriate medium, including but not limited to: wireless, wire, optic cable, radio frequency (RF), etc., or any suitable combination of the foregoing.

A computer program code for performing the operations of the present application may be written in one or more programming languages or combinations thereof, the described programming languages include an object-oriented programming language-such as Java, Smalltalk, C++, and further include a conventional procedural programming language-such as a "C" language or similar programming language. The program code may be executed in following manners: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN) or a wide area network (WAN), or may be connected to an external computer (for example, connected to the external computer through an internet provided by an internet service provider).

The above description is only an exemplary embodiment of the present application, and is not intended to limit the scope of protection of the present application.

The term user equipment covers any suitable type of wireless user equipment such as a mobile phone, a portable data processing apparatus, a portable web browser or a vehicle-mounted mobile station.

In general, various embodiments of the present application may be implemented in hardware or special purpose circuits, software, logic or any combination thereof. For example, some aspects may be implemented in hardware, while other aspects may be implemented in firmware or software which may be executed by a controller, microprocessor or other computing device, although the present application is not limited thereto.

Embodiments of the present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

Any block diagram of the logic flow in the accompanying drawings of the present application may represent program processes, or may represent interconnected logic circuits, modules, and functions, or may represent a combination of program processes and logic circuits, modules, and functions. The computer program may be stored on a memory. The memory may be of any type suitable for the local technical environment and may be implemented using any suitable data storage technology, such as, but not limited to, a read-only memory (ROM), a random access memory (RAM), an optical memory device and system (digital versatile disc (DVD) or compact disk (CD)), etc. Computer readable media may include non-instantaneous storage media. Data processors may be of any type suitable for the local technical environment, such as, but not limited to, general-purpose computers, specialized computers, microprocessors, digital signal processors (DSP), application specific integrated circuits (ASIC), field-programmable gate array (FPGA)), and processors based on multi-core processor architectures.

## Claims

1. A data processing method, applied to a first communication node, comprising:
acquiring N first sequences;
determining a second sequence according to at least one first sequence of the N first sequences;
performing a processing on data based on the second sequence to obtain data symbols; and
sending the N first sequences and the data symbols;
wherein N is an integer greater than or equal to 2.

2. The method of claim 1, wherein the N first sequences are randomly acquired.

3. The method of claim 1, wherein acquiring the N first sequences comprises one of:
acquiring the N first sequences from one sequence set, wherein any two sequences in the N first sequences are different, or T sequences in the N first sequences are the same, T is an integer larger than or equal to 2, and T is less than or equal to N;
acquiring the N first sequences from different sequence sets; or
acquiring the N first sequences from different subsets of a same sequence set.

4. The method of claim 3, wherein the sequence set comprises at least one of: a Hadamard sequence set; a sequence set obtained according to the Hadamard sequence set; a ZC sequence set; or a four-phase sequence set.

5. The method of claim 1, wherein determining the second sequence according to the at least one first sequence of the N first sequences comprises:
determining a combined sequence according to the N first sequences; and
determining the second sequence according to the combined sequence and a corresponding relationship between the combined sequence and the second sequence.

6. The method of claim 5, wherein determining the combined sequence according to the N first sequences comprises:
performing a series combination processing or a superposition processing on the N first sequences to obtain the combined sequence.

7. The method of claim 1, wherein determining the second sequence according to the at least one first sequence of the N first sequences comprises:
determining the second sequence according to one first sequence of the N first sequences and a corresponding relationship between the first sequence and the second sequence.

8. The method of claim 1, wherein the processing on the data based on the second sequence comprises one of: a spreading processing; a modulation processing; or a mapping processing.

9. The method of claim 1, wherein sending the N first sequences comprises one of:
mapping the N first sequences to different transmission resources to generate at least one signal, and sending the at least one signal; or
performing a combining processing on the N first sequences to obtain a combined sequence, mapping the combined sequence to a transmission resource to generate a signal and sending the signal, wherein the combining processing includes a series combination processing or a superposition processing.

10. The method of claim 1, wherein each first sequence of the N first sequences corresponds to a respective pilot.

11. The method of claim 10, wherein transmission resources used by pilots respectively corresponding to the N first sequences comprise one of: time division resources; frequency division resources; time-frequency division resources; code division resources; or randomly selected resources.

12. The method of claim 1, wherein the data carries information, and the information comprises at least one of:
identification information of the N first sequences; energy information of at least one first sequence of the N first sequences; identification information of the second sequence; or identification information of the first communication node.

13. A data processing method, applied to a second communication node, comprising:
receiving a signal and data symbols, wherein the signal is generated based on N first sequences;
detecting the signal to obtain M sequences which are used for generating the signal, and determining, according to the M sequences, a second sequence corresponding to the data symbols; and
detecting the data symbols according to the second sequence to acquire a detection result;
wherein N is an integer greater than or equal to 2, and M is an integer greater than or equal to 1.

14. The method of claim 13, wherein detecting the signal to obtain the M sequences which are used for generating the signal, and determining, according to the M sequences, the second sequence corresponding to the data symbols comprises:
detecting the signal based on a combined sequence set to obtain the M sequences which are used for generating the signal, wherein the combined sequence set is determined based on at least one sequence set to which the N first sequences belong and the M sequences comprise one combined sequence obtained from the N first sequences; and
determining the second sequence corresponding to the data symbols according to the combined sequence and a corresponding relationship between the combined sequence and the second sequence.

15. The method of claim 13, wherein detecting the signal to obtain the M sequences which are used for generating the signal, and determining, according to the M sequences, the second sequence corresponding to the data symbols comprises:
detecting the signal based on a combined sequence set to obtain the M sequences which are used for generating the signal, wherein the combined sequence set is determined based on at least one sequence set to which the N first sequences belong and the M sequences comprise one combined sequence obtained from the N first sequences;
determining the N first sequences according to the combined sequence; and
determining the second sequence corresponding to the data symbols according to one first sequence of the N first sequences and a corresponding relationship between the first sequence and the second sequence.

16. The method of claim 13, wherein detecting the signal to obtain the M sequences which are used for generating the signal, and determining, according to the M sequences, the second sequence corresponding to the data symbols comprises:
detecting the signal based on a sequence set to which one first sequence of the N first sequences belongs to obtain the M sequences which are used for generating the signal, wherein the M sequences comprise the one first sequence; and
determining the second sequence corresponding to the data symbols according to the one first sequence and a corresponding relationship between the one first sequence and the second sequence.

17. The method of claim 13, wherein detecting the signal to obtain the M sequences which are used for generating the signal, and determining, according to the M sequences, the second sequence corresponding to the data symbols comprises:
detecting the signal based on at least one sequence set to which the N first sequences belong to obtain the M sequences which are used for generating the signal, and the M sequences comprise M first sequences;
determining a combined sequence according to the M first sequences; and
determining the second sequence corresponding to the data symbols according to the combined sequence and a corresponding relationship between the combined sequence and the second sequence.

18. The method of claim 13, further comprising:
performing a channel estimation by using at least one sequence of the M sequences; or
in response to the M sequences comprising a combined sequence obtained from the N first sequences, determining the N first sequences according to the combined sequence, and performing a channel estimation by using at least one first sequence of the N first sequences.

19. The method of claim 13, further comprising:
acquiring information from the detection result, wherein the information comprises at least one of: identification information of the N first sequences; energy information of at least one first sequence of the N first sequences; identification information of the second sequence; or identification information of a first communication node.

20. A data processing apparatus, configured at a first communication node, comprising:
an acquisition module, which is configured to acquire N first sequences;
a determination module, which is configured to determine a second sequence according to at least one first sequence of the N first sequences;
a processing module, which is configured to perform a processing on data based on the second sequence to obtain data symbols; and
a sending module, which is configured to send the N first sequences and the data symbols, wherein N is an integer greater than or equal to 2.

21. A data processing apparatus, configured at a second communication node, comprising:
a receiving module, which is configured to receive a signal and data symbols, wherein the signal is generated based on N first sequences, and N is an integer greater than or equal to 2;
a detection module, which is configured to detect the signal to obtain M sequences which are used for generating the signal, and determine, according to the M sequences, a second sequence corresponding to the data symbols, wherein M is an integer greater than or equal to 1; and
an acquisition module, which is configured to detect the data symbols according to the second sequence to acquire a detection result.

22. A first communication node, comprising:
at least one processor; and
a storage apparatus, which is configured to store at least one program;
wherein the at least one program, when executed by the at least one processor, causes the at least one processor to implement the data processing method of any one of claims 1 to 12.

23. A second communication node, comprising:
at least one processor; and
a storage apparatus, which is configured to store at least one program;
wherein the at least one program, when executed by the at least one processor, causes the at least one processor to implement the data processing method of any one of claims 13 to 19.

24. A storage medium, storing a computer program, wherein the computer program, when executed by a processor, implements the data processing method of any one of claims 1 to 19.
